(19) Europäisches Patentamt
European Patent Office
Office européen des brevets

(11) EP 3 088 468 B1

(12) # EUROPEAN PATENT SPECIFICATION

(45) Date of publication and mention of the grant of the patent:
**13.01.2021 Bulletin 2021/02**

(21) Application number: **14874817.1**

(22) Date of filing: **25.11.2014**

(51) Int Cl.:
***C08L 69/00*** *(2006.01)* ***C08K 5/00*** *(2006.01)*
***C08L 83/10*** *(2006.01)* ***C08G 77/448*** *(2006.01)*

(86) International application number:
**PCT/JP2014/081041**

(87) International publication number:
**WO 2015/098395 (02.07.2015 Gazette 2015/26)**

(54) **MOLDED BODY FOR OUTDOOR INSTALLATION**
FORMKÖRPER ZUR FREILUFTAUFSTELLUNG
CORPS MOULÉ POUR INSTALLATION EXTÉRIEURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2013 JP 2013270014**

(43) Date of publication of application:
**02.11.2016 Bulletin 2016/44**

(73) Proprietor: **Idemitsu Kosan Co., Ltd**
**Tokyo 100-8321 (JP)**

(72) Inventor: **AOKI, Yusuke**
**Ichihara-shi**
**Chiba 299-0193 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 639 271**
**JP-A- H0 726 149**
**JP-A- 2012 153 824**
**JP-A- 2012 153 824**
**JP-A- 2014 028 896**
**US-A1- 2009 088 514**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a molded body for outdoor installation, and more specifically, to a molded body for outdoor installation that is formed of a specific polycarbonate resin composition, is excellent in impact resistance retention ratio at the time of long-term use in outdoors and in impact resistance at low temperature, is capable of preventing yellowing of a molded article at the time of molding, and is excellent in wet heat stability.

BACKGROUND ART

An aromatic polycarbonate resin (PC) produced from, for example, bisphenol A has been frequently used as a material for various parts in an electrical and electronic field, an automobile field, an architecture field, and the like because the resin is excellent in heat resistance, mechanical characteristics, dimensional stability, and the like. However, for example, a PC molded body to be installed outdoors has been used under a severe condition. For example, the molded body is exposed to sunlight or rain and wind, or is exposed to low temperature in winter or high temperature in summer. The molded body is used under such severe condition, and hence it has been known that a UV absorber is added to the molded body before its use for preventing the deterioration of its physical properties or its yellowing due to the exposure to the sunlight or the rain and wind.

Meanwhile, it has been known that a molded body for outdoor installation, e.g., an outdoor electrical and electronic storage box, such as an information communication box, is produced by using an aromatic polycarbonate resin mixture containing a copolymer of a polycarbonate and a polyorganosiloxane as an aromatic polycarbonate resin for improving its impact resistance at low temperature (e.g., from -30°C to -40°C) (see, for example, PTL 1).

In addition, in PTL 2, there is a disclosure of a transparent molded body for outdoor installation, the molded body being a flat plate-shaped molded body having an average thickness of from 0.5 mm to 5 mm, which is obtained by molding an aromatic polycarbonate resin composition obtained by incorporating a UV absorber and a specific phosphorus compound into a copolymer of a polycarbonate and a polyorganosiloxane, the copolymer containing silicon at a specific content, and the molded body having a haze value of the average thickness of 10 or less.

However, a molded body for outdoor installation molded from any one of the aromatic polycarbonate-based resin compositions specifically described in those patent literatures involves the following problem. When the molded body is exposed to sunlight or rain and wind, its weatherability reduces, and hence as time elapses, excellent impact resistance of its polycarbonate resin largely reduces or the molded body yellows.

EP 2 639 271 A1 is directed to a polycarbonate resin composition containing 100 parts by mass of a resin mixture formed of 30 to 100 mass% of a PC-POS copolymer having a specified constituent unit and wherein an average repetition number n of organosiloxane constituent units is 70 to 500; and 70 to 0 mass% of an aromatic polycarbonate resin except the PC-POS copolymer; 0.01 to 0.15 parts by mass of an alkaline (earth)metal salt of an organic sulfonic acid, 0.1 to 1 part by mass of a polytetrafluoroethylene having a fibril-forming ability and 2 to 15 parts by mass of titanium dioxide particles each having, on an outermost surface thereof, a coating layer formed of a polyol free of a nitrogen atom.

JP 2012-153824 is directed to a polycarbonate resin composition comprising 0 to 95 parts by weight of an aromatic polycarbonate resin, a polycarbonate block represented by a specified formula and a polydiorganosiloxane block represented by a specified formula as well as 0.01 to 0.5 parts by weight of a UV absorber and 0.001 parts by weight of a phosphorus-containing stabilizer.

US 2009/0088514 A1 describes a thermoplastic composition comprising specified amounts of a polycarbonate, a polysiloxane-polycarbonate comprising specified siloxane units as well as an impact modifier, and a filler having a specified particle size.

CITATION LIST

PATENT LITERATURE

PTL 1: WO 2011/1551490 A1

PTL 2: JP 2011-246530 A

SUMMARY OF INVENTION

TECHNICAL PROBLEM

It is an object of the present invention to provide a molded body for outdoor installation that has solved the problem through the use of, as an aromatic polycarbonate-based resin containing a polycarbonate-polyorganosiloxane copolymer (hereinafter sometimes abbreviated as "PC-POS"), an aromatic polycarbonate-based resin containing a PC-POS in which the chain length of a polyorganosiloxane and the content of a polyorganosiloxane block moiety fall within specific ranges, the molded body being excellent in impact resistance retention ratio at the time of long-term use in the outdoors and in impact resistance at low temperature, being capable of preventing the yellowing of a molded article, and being excellent in wet heat stability.

SOLUTION TO PROBLEM

The inventors of the present invention have made extensive investigations, and as a result, have found that the use of a composition obtained by blending a UV absorber into an aromatic polycarbonate-based resin containing a PC-POS using a specific number of siloxane repeating units and a specific content of the siloxane repeating units out of the PC-POS's can provide a molded body for outdoor installation excellent in balance between the physical properties. Thus, the inventors have completed the present invention.

That is, the present invention relates to the following items [1] to [5].

[1] A molded body for outdoor installation, which is obtained by molding a polycarbonate-based resin composition comprising a blend of:

100 parts by mass of a polycarbonate-based resin (A) comprising

30 mass% to 100 mass% of a polycarbonate-polyorganosiloxane copolymer (A-1) having a polycarbonate block comprising, in a main chain thereof, a repeating unit represented by the general formula (I), and a polyorganosiloxane block containing a siloxane repeating structure represented by the general formula (II) and having an average number n of repetitions of from 70 to 500, and

70 mass% to 0 mass% of an aromatic polycarbonate resin (A-2) except the polycarbonate-polyorganosiloxane copolymer (A-1); and

0.001 part by mass to 1 part by mass of a UV absorber (B), which is at least one selected from a benzophenone-based UV absorber and a benzotriazole-based UV absorber,
wherein a content x of the polyorganosiloxane block in the polycarbonate-based resin (A) is from 2.0 mass% to 15.0 mass%, and a product nx of the average number n of repetitions and the content x of the polyorganosiloxane block is 400 or more:

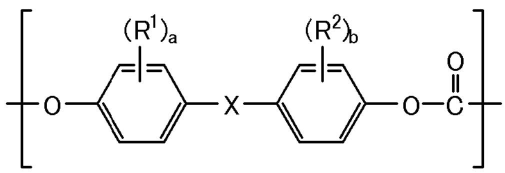

(I)

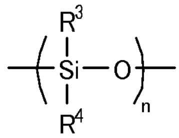

(II)

wherein:

$R^1$ and $R^2$ each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a

cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, $-SO_2-$, -O-, or -CO-, and a and b each independently represent an integer of from 0 to 4; and

$R^3$ and $R^4$ each independently represent a hydrogen atom, a halogen atom, an alkyl group having 1 to 6 carbon atoms, an alkoxy group having 1 to 6 carbon atoms, or an aryl group having 6 to 12 carbon atoms, and the average number n of repetitions represents a total number of siloxane repeating units in the polyorganosiloxane block.

[2] The molded body for outdoor installation according to Item [1], wherein the polycarbonate-based resin composition further comprises 0.001 part by mass to 2 parts by mass of an antioxidant (C) with respect to 100 parts by mass of the polycarbonate-based resin (A).

[3] The molded body for outdoor installation according to Item [1] or [2], wherein the polycarbonate-based resin (A) has a viscosity-average molecular weight of from 16,000 to 26,000.

[4] The molded body for outdoor installation according to any one of Items [1] to [3], wherein the polyorganosiloxane block containing the siloxane repeating structure represented by the general formula (II) is represented by the following general formula (II') or the following general formula (II"):

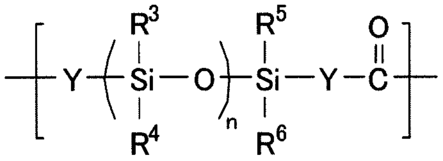

(II')

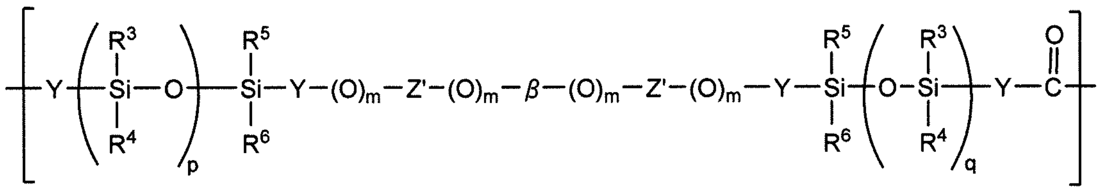

(II")

wherein, in the general formula (II') and the general formula (II"), $R^3$ to $R^6$ each independently represent a hydrogen atom, a halogen atom, an alkyl group having 1 to 6 carbon atoms, an alkoxy group having 1 to 6 carbon atoms, or an aryl group having 6 to 12 carbon atoms, Y represents a single bond, or a divalent organic residue containing -C(=O)-, an aliphatic group, or an aromatic group, n represents an average number of repetitions of from 70 to 500, Z' represents a single bond, $-R^7O-$, $-R^7COO-$, $-R^7NH-$, -COO-, or -S-, and the $R^7$ represents a linear, branched, or cyclic alkylene group, an aryl-substituted alkylene group that may have an alkoxy group on an aromatic ring thereof, an arylene group, or a diarylene group, β represents a divalent group derived from a diisocyanate compound or a divalent group derived from a dicarboxylic acid, m represents 0 or 1, and a sum of p and q is equal to n, and represents an average number of repetitions of from 30 to 500.

[5] The molded body for outdoor installation according to any one of Items [1] to [4], wherein the molded body for outdoor installation is selected from an outdoor electrical and electronic storage box, a junction box for photovoltaic power generation, a solar water heater housing, an air conditioner outdoor unit housing, a car port roofing material, and an outer frame for a signboard or an advertisement pillar.

ADVANTAGEOUS EFFECTS OF INVENTION

According to the present invention, it is possible to provide the molded body for outdoor installation that is excellent in impact resistance retention ratio at the time of long-term use in the outdoors and in impact resistance at low temperature, can prevent the yellowing of a molded article, and is excellent in wet heat stability.

DESCRIPTION OF EMBODIMENTS

A molded body for outdoor installation of the present invention is a molded body for outdoor installation obtained by molding a polycarbonate resin composition comprising a blend of: 100 parts by mass of the following specific component (A); and 0.001 part by mass to 1 part by mass of the following specific component (B).

The molded body for outdoor installation of the present invention is described in detail below. A provision

considered to be preferred in this description can be arbitrarily adopted, and a combination of preferred provisions can be said to be more preferred.

[Polycarbonate-based Resin (A)]

A polycarbonate-based resin serving as the component (A) contains a polycarbonate-polyorganosiloxane copolymer (A-1) (hereinafter sometimes abbreviated as "PC-POS (A-1)") having a polycarbonate block comprising, in a main chain thereof, a repeating unit represented by the general formula (I), and a polyorganosiloxane block containing a siloxane repeating structure represented by the general formula (II) and having an average number n of repetitions of from 30 to 500.

One kind of the PC-POS's (A-1) may be used alone, or two or more kinds thereof may be used in combination.

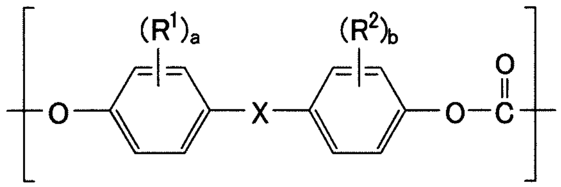

(I)

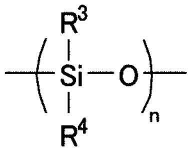

(II)

[In the formulae, $R^1$ and $R^2$ each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, $-SO_2-$, -O-, or -CO-, and a and b each independently represent an integer of from 0 to 4.

$R^3$ and $R^4$ each independently represent a hydrogen atom, a halogen atom, an alkyl group having 1 to 6 carbon atoms, an alkoxy group having 1 to 6 carbon atoms, or an aryl group having 6 to 12 carbon atoms, and the average number n of repetitions represents the total number of siloxane repeating units in the polyorganosiloxane block.]

Examples of the halogen atom that $R^1$ and $R^2$ in the general formula (I) each independently represent include a fluorine atom, a chlorine atom, a bromine atom, and an iodine atom.

Examples of the alkyl group that $R^1$ and $R^2$ each independently represent include a methyl group, an ethyl group, a n-propyl group, an isopropyl group, various butyl groups ("various" means that a linear group and any branched group are included, and the same shall apply hereinafter), various pentyl groups, and various hexyl groups. An example of the alkoxy group that $R^1$ and $R^2$ each independently represent is an alkoxy group whose alkyl group moiety is the alkyl group described above.

$R^1$ and $R^2$ each preferably represent an alkyl group having 1 to 4 carbon atoms or an alkoxy group having 1 to 4 carbon atoms.

Examples of the alkylene group represented by X include a methylene group, an ethylene group, a trimethylene group, a tetramethylene group, and a hexamethylene group, and an alkylene group having 1 to 5 carbon atoms is preferred. Examples of the alkylidene group represented by X include an ethylidene group and an isopropylidene group. The cycloalkylene group represented by X is preferably a cycloalkylene group having 5 to 10 carbon atoms, and examples thereof include a cyclopentanediyl group, a cyclohexanediyl group, and a cyclooctanediyl group. Examples of the cycloalkylidene group represented by X include a cyclohexylidene group, a 3,5,5-trimethylcyclohexylidene group, and a 2-adamantylidene group, a cycloalkylidene group having 5 to 10 carbon atoms is preferred, and a cycloalkylidene group having 5 to 8 carbon atoms is more preferred. As an aryl moiety of the arylalkylene group represented by X, there are given, for example, aryl groups each having 6 to 14 ring-forming carbon atoms, such as a phenyl group, a naphthyl group, a biphenyl group, and an anthryl group. As an aryl moiety of the arylalkylidene group represented by X, there are given, for example, aryl groups each having 6 to 14 ring-forming carbon atoms, such as a phenyl group, a naphthyl group, a biphenyl group, and an anthryl group.

a and b each independently represent an integer of from 0 to 4, preferably from 0 to 2, more preferably 0 or 1.

Examples of the halogen atom that $R^3$ and $R^4$ in the general formula (II) each independently represent include a fluorine atom, a chlorine atom, a bromine atom, and an iodine atom. Examples of the alkyl group or alkoxy group that

$R^3$ and $R^4$ each independently represent include the same examples as those in the case of $R^1$ and R2. Examples of the aryl group that $R^3$ and $R^4$ each independently represent include a phenyl group and a naphthyl group.

$R^3$ and $R^4$ each preferably represent a hydrogen atom, an alkyl group having 1 to 6 carbon atoms, an alkoxy group having 1 to 6 carbon atoms, or an aryl group having 6 to 12 carbon atoms, and each more preferably represent a methyl group.

As described later, the component (A) may contain, as a component (A-2), an aromatic polycarbonate resin that does not correspond to the component (A-1). Here, the blending ratios of the component (A-1) and the component (A-2) in the component (A) are as follows: the component (A-1) is used at a ratio of from 30 mass% to 100 mass%, and the component (A-2) is used at a ratio of from 70 mass% to 0 mass% [the total amount of the component (A-1) and the component (A-2) is defined as 100 mass%].

The case where the content of the component (A-1) is less than 30 mass% may not be preferred in terms of the production of the PC-POS because the content of the polyorganosiloxane block moiety in the component (A-1) needs to be increased. From the foregoing viewpoint, the content of the component (A-1) is preferably 60 mass% or more, more preferably 70 mass% or more, still more preferably 80 mass% or more, particularly preferably 90 mass% or more in the component (A).

The viscosity-average molecular weight (Mv) of the polycarbonate-based resin (A) formed of 30 mass% to 100 mass% of the PC-POS (A-1) and 70 mass% to 0 mass% of the aromatic polycarbonate resin (A-2) except the component (A-1) is preferably from 16,000 to 26,000, more preferably from 17,000 to 23,000. When the viscosity-average molecular weight of the component (A) falls within the range, the impact resistance of the molded body becomes sufficient, and in particular, the impact resistance of a thin-walled molded body becomes excellent.

In the present invention, the viscosity-average molecular weight (Mv) is a value calculated from Schnell's equation ($[\eta] = 1.23 \times 10^{-5} \times Mv^{0.83}$) through the measurement of the limiting viscosity [η] of a methylene chloride solution at 20°C with an Ubbelohde-type viscosity tube.

In the present invention, the content (x) of the polyorganosiloxane block containing siloxane repeating units represented by the general formula (II) and having an average number n of repetitions of from 70 to 500 in the polycarbonate-based resin (A) needs to be from 2.0 mass% to 15.0 mass%.

The case where the x is less than 2.0 mass% is not preferred because the impact resistance of the molded body at low temperature (-30°C) reduces, and its Izod impact strength retention ratio after a weatherability test when exposed to sunlight or rain and wind for a long time period, and its Izod impact strength retention ratio after a wet heat stability test largely reduce. In addition, in the case where the x is more than 15.0 mass%, the impact resistance thereof at each of normal temperature (23°C) and low temperature (-30°C) reduces.

From the foregoing viewpoints, the content (x) of the polyorganosiloxane block is preferably from 2.5 mass% to 10 mass%, more preferably from 3.0 mass% to 8.5 mass%, still more preferably from 3.2 mass% to 7.5 mass%.

Here, the content (x) of the polyorganosiloxane block in the component (A) is a value calculated by nuclear magnetic resonance (NMR) measurement.

The n in the general formula (II) represents an average number of repetitions, and represents the total number of the siloxane repeating units in the polyorganosiloxane block.

In addition, the case where the n represents more than 500 is not preferred because when the PC-POS is produced, the handling of the polyorganosiloxane at the time of the production becomes difficult.

In terms of the impact resistance at low temperature (-30°C), the n represents 70 or more.

In addition, in terms of the transparency of the molded body, it is desired that the n preferably represent 200 or less, and more preferably represent 150 or less.

In the present invention, the product (nx) of the average number n of repetitions of the siloxane repeating units represented by the general formula (II) and the content (x) of the polyorganosiloxane block in the component (A) needs to be 400 or more.

The case where the nx is less than 400 is not preferred because the Izod impact strength retention ratio after the weatherability test and the Izod impact strength retention ratio after the wet heat stability test largely reduce. An upper limit for the nx, which is determined from upper limits for the n and the x, is typically 3,000 or less, preferably 2,000 or less.

The structure of the polyorganosiloxane block containing the repeating structure represented by the general formula (II) is preferably a structure represented by the following general formula (II').

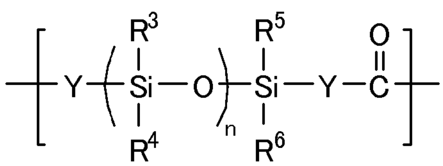

(II')

In the formula (II'), $R^3$ to $R^6$ each independently represent a hydrogen atom, a halogen atom, an alkyl group having 1 to 6 carbon atoms, an alkoxy group having 1 to 6 carbon atoms, or an aryl group having 6 to 12 carbon atoms, Y represents a single bond, or a divalent organic residue containing -C(=O)-, an aliphatic group, or an aromatic group, and n represents an average number of repetitions of from 70 to 500.

$R^3$ to $R^6$ each preferably represent a hydrogen atom, an alkyl group having 1 to 6 carbon atoms, an alkoxy group having 1 to 6 carbon atoms, or an aryl group having 6 to 12 carbon atoms. Y preferably represents a residue of a phenol-based compound having an alkyl group, and more preferably represents an organic residue derived from allylphenol or an organic residue derived from eugenol.

In addition, it is also preferred that the structure of the polyorganosiloxane block containing the repeating structure represented by the general formula (II) be a structure represented by the following formula (II").

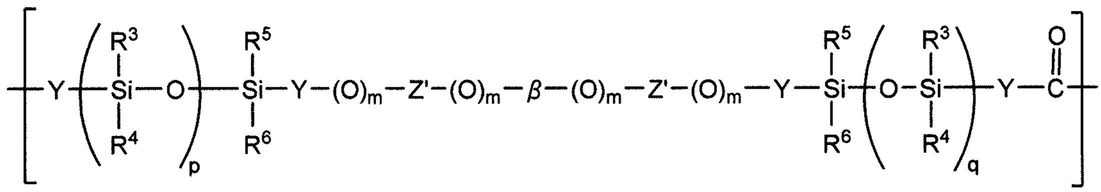

(II")

In the formula (II"), $R^3$ to $R^6$ and Y are the same as those in the general formula (II'), and preferred examples thereof are also the same. The sum of p and q is equal to n, and represents an average number of repetitions of from 70 to 500. Each of p and q is preferably equal to n/2.

m represents 0 or 1.

Z' represents a single bond, $-R^7O-$, $-R^7COO-$, $-R^7NH-$, -COO-, or -S-, and the $R^7$ represents a linear, branched, or cyclic alkylene group, an aryl-substituted alkylene group that may have an alkoxy group on an aromatic ring thereof, an arylene group, or a diarylene group. Specific examples of the $R^7$ are described later.

In addition, β represents a divalent group derived from a diisocyanate compound or a divalent group derived from a dicarboxylic acid. Specific examples of the divalent group derived from a diisocyanate compound and the divalent group derived from a dicarboxylic acid are described later.

A method of producing the PC-POS (A-1) is not particularly limited, and the PC-POS can be easily produced with reference to a known production method for a PC-POS, such as a method described in JP 2010-241943 A.

Specifically, the PC-POS can be produced by: dissolving an aromatic polycarbonate oligomer produced in advance and a polyorganosiloxane having a reactive group at a terminal thereof (such as a polyorganosiloxane represented by the following general formula (2) or (3)) in a water-insoluble organic solvent (such as methylene chloride); adding an aqueous alkaline compound solution (such as aqueous sodium hydroxide) of a dihydric phenol represented by the following general formula (1) (such as bisphenol A) to the solution; and subjecting the mixture to an interfacial polycondensation reaction through the use of a tertiary amine (such as triethylamine) or a quaternary ammonium salt (such as trimethylbenzylammonium chloride) as a polymerization catalyst in the presence of a molecular weight modifier (terminal stopper) (a monohydric phenol such as *p-t*-butylphenol). The content of the polyorganosiloxane block containing the siloxane repeating structure represented by the general formula (II) in the PC-POS (A-1) component can be adjusted by, for example, adjusting the usage amount of the polyorganosiloxane.

After the interfacial polycondensation reaction, the resultant is appropriately left at rest to be separated into an aqueous phase and a water-insoluble organic solvent phase [separating step], the water-insoluble organic solvent phase is washed (preferably washed with a basic aqueous solution, an acidic aqueous solution, and water in the stated order) [washing step], and the resultant organic phase is concentrated [concentrating step], pulverized [pulverizing step], and dried [drying step]. Thus, the PC-POS can be obtained. The content of the polyorganosiloxane block in the component (A) can be adjusted to fall within the range by adjusting a usage ratio between the PC-POS (A-1) component whose polyorganosiloxane block content has been adjusted and the aromatic polycarbonate resin (A-2) except the component (A-1) in the polycarbonate-based resin (A).

In addition, the PC-POS can be produced by copolymerizing a dihydric phenol represented by the following general formula (1), a polyorganosiloxane represented by the following general formula (2), and phosgene, a carbonate, or a chloroformate.

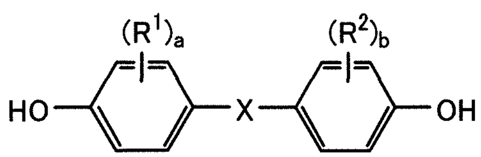

(1)

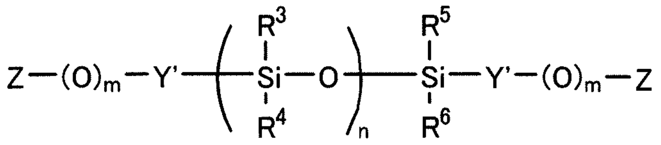 (2)

Here, in the general formula (1), $R^1$ and $R^2$, X, a, and b are the same as those in the general formula (I), and in the general formula (2), $R^3$ to $R^6$ are the same as those in the general formula (II'), n is the same as that in the general formula (II), and Y' is the same as Y in the general formula (II').

m represents 0 or 1, Z represents a halogen atom, $-R^7OH$, $-R^7COOH$, $-R^7NH_2$, $-R^7NHR^8$, -COOH, or -SH, $R^7$ represents a linear, branched, or cyclic alkylene group, an aryl-substituted alkylene group that may have an alkoxy group on an aromatic ring thereof, an arylene group, or a diarylene group, and $R^8$ represents an alkyl group, an alkenyl group, an aryl group, an aralkyl group, or an alkoxy group.

The diarylene group refers to a group obtained by linking two arylene groups directly or through a divalent organic group, and is specifically a group having a structure represented by $-Ar^1-W-Ar^2-$. Here, $Ar^1$ and $Ar^2$ each represent an arylene group, and W represents a single bond or a divalent organic group. Specific examples and suitable examples of W are the same as those of X in the general formula (I).

The linear or branched alkylene group represented by $R^7$ is, for example, an alkylene group having 1 to 8, preferably 1 to 5 carbon atoms, and the cyclic alkylene group represented by $R^7$ is, for example, a cycloalkylene group having 5 to 15, preferably 5 to 10 carbon atoms. The alkylene moiety of the aryl-substituted alkylene group represented by $R^7$ is, for example, an alkylene group having 1 to 8, preferably 1 to 5 carbon atoms. The aryl moiety of the aryl-substituted alkylene group represented by $R^7$ is, for example, an aryl group having 6 to 14 ring-forming carbon atoms, such as a phenyl group, a naphthyl group, a biphenyl group, or an anthryl group. The arylene group represented by any one of $R^7$, $Ar^1$, and $Ar^2$ is, for example, an arylene group having 6 to 14 ring-forming carbon atoms, such as a phenylene group, a naphthylene group, a biphenylene group, or an anthrylene group.

Y' preferably represents a single bond, or a divalent organic residue containing -C(=O)-, an aliphatic group, or an aromatic group, the organic residue being bonded to Si and O or to Si and Z. $R^3$ to $R^6$ each preferably represent a hydrogen atom, an alkyl group having 1 to 6 carbon atoms, an alkoxy group having 1 to 6 carbon atoms, or an aryl group having 6 to 12 carbon atoms. n is the same as that in the foregoing, and m represents 0 or 1.

Z preferably represents $-R^7OH$, $-R^7COOH$, $-R^7NH_2$, -COOH, or -SH. The $R^7$ is as defined in the foregoing, and preferred examples thereof are also the same as those in the foregoing.

$R^8$ preferably represents an alkyl group, an alkenyl group, an aryl group, or an aralkyl group.

The dihydric phenol represented by the general formula (1) serving as a raw material for the PC-POS is not particularly limited, but is suitably 2,2-bis(4-hydroxyphenyl)propane [trivial name: bisphenol A]. When bisphenol A is used as the dihydric phenol, in the resultant PC-POS, X represents an isopropylidene group and a=b=0 in the general formula (I).

Examples of the dihydric phenol except bisphenol A include: bis(hydroxyaryl)alkanes, such as bis(4-hydroxyphenyl)methane, 1,1-bis(4-hydroxyphenyl)-ethane, 2,2-bis(4-hydroxyphenyl)butane, 2,2-bis(4-hydroxyphenyl)octane, bis(4-hydroxyphenyl)phenylmethane, bis(4-hydroxyphenyl)diphenylmethane, 2,2-bis(4-hydroxy-3-methylphenyl)propane, bis(4-hydroxyphenyl)naphthylmethane, 1,1-bis(4-hydroxy-3-*t*-butylphenyl)-propane, 2,2-bis(4-hydroxy-3-bromophenyl)propane, 2,2-bis(4-hydroxy-3,5-dimethylphenyl)-propane, 2,2-bis(4-hydroxy-3-chlorophenyl)propane, 2,2-bis(4-hydroxy-3,5-dichlorophenyl)-propane, and 2,2-bis(4-hydroxy-3,5-dibromophenyl)propane; bis(hydroxyaryl)cycloalkanes, such as 1,1-bis(4-hydroxyphenyl)cyclopentane, 1,1-bis(4-hydroxyphenyl)cyclohexane, 1,1-bis(4-hydroxyphenyl)-3,5,5-trimethylcyclohexane, 2,2-bis(4-hydroxyphenyl)norbornane, and 1,1-bis(4-hydroxyphenyl)cyclododecane; dihydroxyaryl ethers, such as 4,4'-dihydroxydiphenyl ether and 4,4'-dihydroxy-3,3'-dimethylphenyl ether; dihydroxydiaryl sulfides, such as 4,4'-dihydroxydiphenyl sulfide and 4,4'-dihydroxy-3,3'-dimethyldiphenyl sulfide; dihydroxydiaryl sulfoxides, such as 4,4'-dihydroxydiphenyl sulfoxide and 4,4'-dihydroxy-3,3'-dimethyldiphenyl sulfoxide; dihydroxydiaryl sulfones, such as 4,4'-dihydroxydiphenyl sulfone and 4,4'-dihydroxy-3,3'-dimethyldiphenyl sulfone; dihydroxydiphenyls, such as 4,4'-dihydroxydiphenyl; dihydroxydiarylfluorenes, such as 9,9-bis(4-hydroxyphenyl)fluorene and 9,9-bis(4-hydroxy-3-methylphenyl)fluorene; dihydroxydiaryladamantanes, such as 1,3-bis(4-hydroxyphenyl)adamantane, 2,2-bis(4-hydroxyphenyl)adamantane, and 1,3-bis(4-hydroxyphenyl)-5,7-dimethyladamantane; 4,4'-[1,3-phenylenebis(1-methylethylidene)]bisphenol; 10,10-bis(4-hydroxyphenyl)-9-anthrone; and 1,5-bis(4-hydroxyphenylthio)-2,3-dioxapentane.

One kind of those dihydric phenols may be used alone, or two or more kinds thereof may be used as a mixture.

The polyorganosiloxane represented by the general formula (2) can be easily produced by subjecting a phenol having an olefinically unsaturated carbon-carbon bond (preferably vinylphenol, allylphenol, eugenol, isopropenylphenol, or the like), to a hydrosilanation reaction with a terminal of a polyorganosiloxane chain having a predetermined polymerization degree (n; number of repetitions). The phenol is more preferably allylphenol or eugenol.

The polyorganosiloxane represented by the general formula (2) is preferably one in which $R^3$ to $R^6$ each represent a methyl group.

Examples of the polyorganosiloxane represented by the general formula (2) include compounds represented by the following general formulae (2-1) to (2-10).

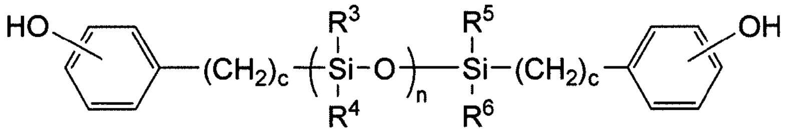

(2-1)

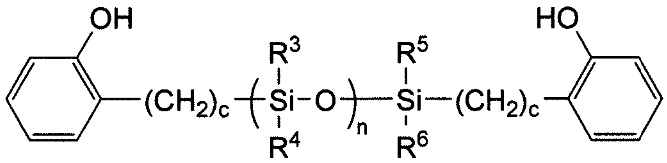

(2-2)

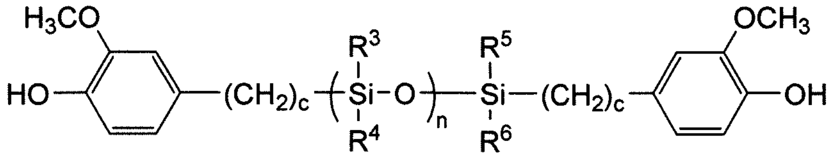

(2-3)

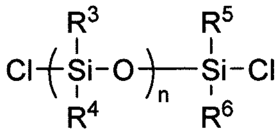

(2-4)

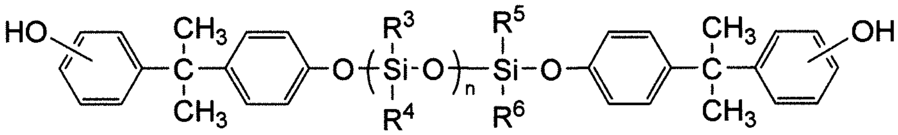

(2-5)

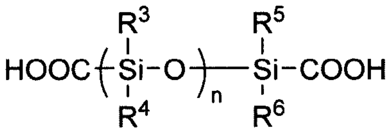

(2-6)

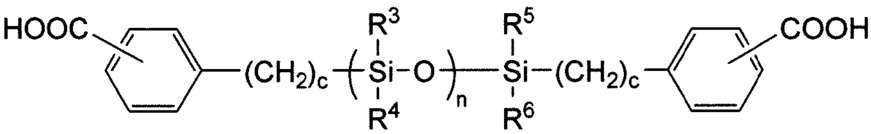

(2-7)

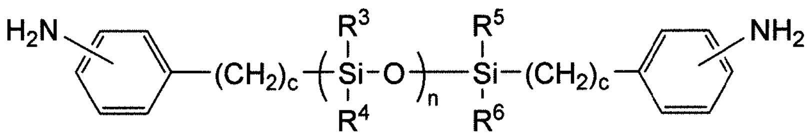

(2-8)

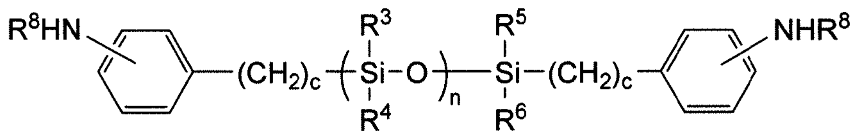
(2-9)

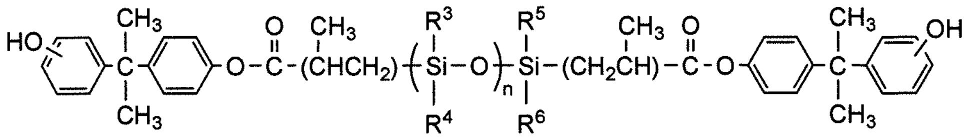
(2-10)

In the general formulae (2-1) to (2-10), $R^3$ to $R^6$, n, and $R^8$ are as defined in the foregoing, and preferred examples thereof are also the same as those in the foregoing. c represents a positive integer and typically represents an integer of from 1 to 6.

Among them, a phenol-modified polyorganosiloxane represented by the general formula (2-1) is preferred from the viewpoint of its ease of polymerization. In addition, an $\alpha,\omega$-bis[3-(*o*-hydroxyphenyl)propyl]polydimethylsiloxane, which is one kind of compound represented by the general formula (2-2), or an $\alpha,\omega$-bis[3-(4-hydroxy-2-methoxyphenyl)-propyl]polydimethylsiloxane, which is one kind of compound represented by the general formula (2-3), is preferred from the viewpoint of its ease of availability.

The phenol-modified polyorganosiloxane can be produced by a known method. For example, the following method is given as the production method.

First, cyclotrisiloxane and disiloxane are caused to react with each other in the presence of an acid catalyst to synthesize an $\alpha,\omega$-dihydrogen organopolysiloxane. At this time, an $\alpha,\omega$-dihydrogen polyorganosiloxane having a desired average number of repetitions can be synthesized by changing a blending ratio between cyclotrisiloxane and disiloxane. Next, the $\alpha$, $\omega$-dihydrogen polyorganosiloxane is subjected to an addition reaction with a phenol compound having an unsaturated aliphatic hydrocarbon group, such as allylphenol or eugenol, in the presence of a catalyst for a hydrosilylation reaction, whereby a phenol-modified polyorganosiloxane having a desired average number of repetitions can be produced.

In addition, at this stage, a cyclic polyorganosiloxane having a low molecular weight and an excessive amount of the phenol compound remain as impurities. Accordingly, those low-molecular weight compounds are preferably removed by distillation with heating under reduced pressure.

Further, the PC-POS may be a copolymer produced by copolymerizing the dihydric phenol represented by the general formula (1), a polyorganosiloxane represented by the following general formula (3), and phosgene, a carbonate, or a chloroformate. The polyorganosiloxane represented by the general formula (3) is a product of a reaction between the polyorganosiloxane represented by the general formula (2) and a diisocyanate compound or a dicarboxylic acid.

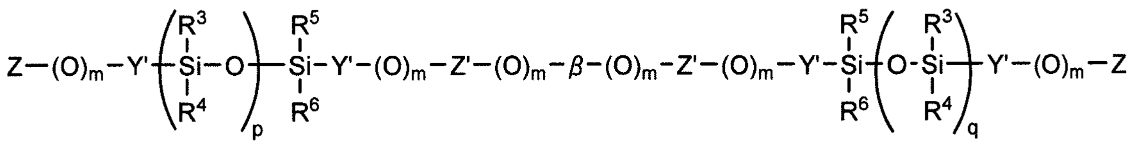
(3)

In the general formula (3), $R^3$ to $R^6$, m, p, q, Y', Z, and Z' are as defined in the foregoing, and preferred examples thereof are also the same as those in the foregoing. With regard to p and q in the general formula (3), a polyorganosiloxane in which p = q, i.e., p = n/2 and q = n/2 can be given as a preferred example.

In addition, β represents a divalent group derived from a diisocyanate compound or a divalent group derived from a dicarboxylic acid, and examples thereof include divalent groups represented by the following general formulae (3-1) to (3-5).

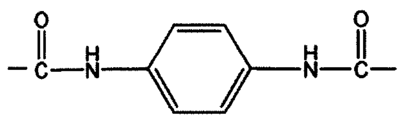
(3-1)

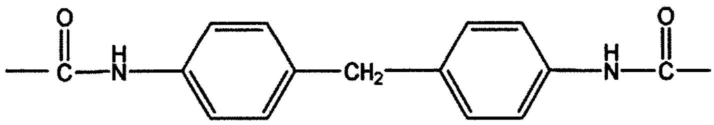

(3-2)

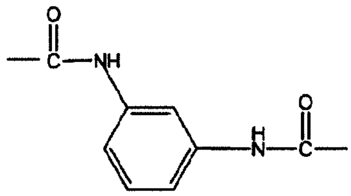

(3-3)

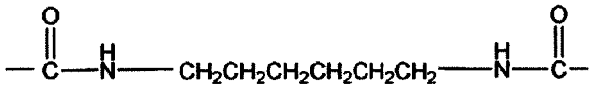

(3-4)

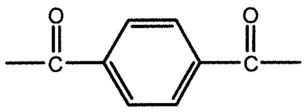

(3-5)

As described in the foregoing, the aromatic polycarbonate resin (A-2) except the component (A-1) may be incorporated into the component (A) to the extent that the effects of the present invention are not impaired. The component (A-2) is obtained by using an aromatic dihydric phenol-based compound, and can be used for adjusting the content of the polyorganosiloxane block containing the repeating structure represented by the general formula (II) in the component (A-1).

The viscosity-average molecular weight of the aromatic polycarbonate resin serving as the component (A-2) is preferably from 10,000 to 40,000, more preferably from 13,000 to 30,000 in terms of physical properties.

The aromatic polycarbonate resin (A-2) is preferably as follows: the resin is free of a repeating structure represented by the general formula (II) and its main chain is formed of a repeating unit represented by the following general formula (III). Such aromatic polycarbonate resin is not particularly limited, and any one of the various known aromatic polycarbonate resins can be used.

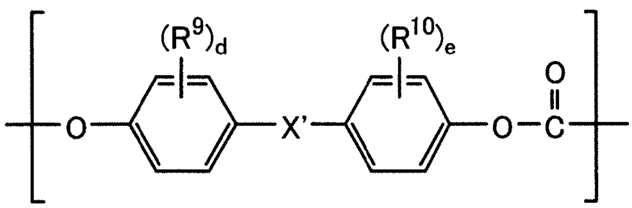

(III)

[In the formula, $R^9$ and $R^{10}$ each independently represent a halogen atom, an alkyl group having 1 to 6 carbon atoms, or an alkoxy group having 1 to 6 carbon atoms, X' represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, -S-, -SO-, $-SO_2-$, -O-, or -CO-, and d and e each independently represent an integer of from 0 to 4.]

Specific examples of $R^9$ and $R^{10}$ include the same examples as those of $R^1$ and $R^2$, and preferred examples thereof are also the same as those of $R^1$ and $R^2$. $R^9$ and $R^{10}$ each more preferably represent an alkyl group having 1 to 6 carbon atoms or an alkoxy group having 1 to 6 carbon atoms. Specific examples of X' include the same examples as those of X, and preferred examples thereof are also the same as those of X. d and e each independently represent preferably from 0 to 2, more preferably 0 or 1.

Specifically, a resin obtained by a conventional production method for an aromatic polycarbonate can be used as the aromatic polycarbonate resin. Examples of the conventional method include: an interfacial polymerization method involving causing the aromatic dihydric phenol-based compound and phosgene to react with each other in the presence of an organic solvent inert to the reaction and an aqueous alkaline solution, adding a polymerization catalyst, such as a tertiary amine or a quaternary ammonium salt, to the resultant, and polymerizing the mixture; and a pyridine method involving dissolving the aromatic dihydric phenol-based compound in pyridine or a mixed solution of pyridine and an

inert solvent, and introducing phosgene to the solution to directly produce the resin.

A molecular weight modifier (terminal stopper), a branching agent, or the like is used as required at the time of the reaction.

The aromatic dihydric phenol-based compound is, for example, a compound represented by the following general formula (III').

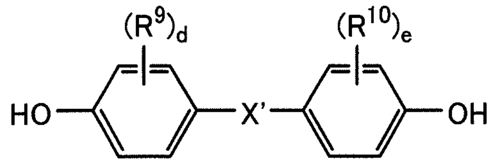

(III')

[In the formula, $R^9$, $R^{10}$, X', d, and e are as defined in the foregoing, and preferred examples thereof are also the same as those in the foregoing.]

Specific examples of the aromatic dihydric phenol-based compound include bis(hydroxyphenyl)alkane-based dihydric phenols, such as 2,2-bis(4-hydroxyphenyl)propane [bisphenol A], bis(4-hydroxyphenyl)methane, 1,1-bis(4-hydroxyphenyl)ethane, and 2,2-bis(4-hydroxy-3,5-dimethylphenyl)propane, 4,4'-dihydroxydiphenyl, a bis(4-hydroxyphenyl)-cycloalkane, bis(4-hydroxyphenyl) oxide, bis(4-hydroxyphenyl) sulfide, bis(4-hydroxyphenyl) sulfone, bis(4-hydroxyphenyl) sulfoxide, and bis(4-hydroxyphenyl) ketone.

Among them, bis(hydroxyphenyl)alkane-based dihydric phenols are preferred, and bisphenol A is more preferred.

One kind of the aromatic polycarbonate resins may be used alone, or two or more kinds thereof may be used in combination.

The content of the aromatic polycarbonate resin (A-2) except the component (A-1) is from 70 mass% to 0 mass%, preferably from 40 mass% to 0 mass%, more preferably from 30 mass% to 0 mass%, still more preferably from 20 mass% to 0 mass%, particularly preferably from 10 mass% to 0 mass% in the component (A).

[(B) UV Absorber]

The polycarbonate resin composition to be used for obtaining the molded body for outdoor installation of the present invention needs to contain a UV absorber as the component (B). For example, the following UV absorber is used as (B) the UV absorber: a benzophenone-based, benzotriazole-based.

Examples of the benzophenone-based UV absorber include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxy trihydrate benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-*n*-dodecyloxybenzophenone, and 2-hydroxy-4-methoxy-2'-carboxybenzophenone.

Examples of the benzotriazole-based UV absorber include: 2-(2-hydroxy-5-methylphenyl)benzotriazole, 2-(2-hydroxy-5-*tert*-octylphenyl)benzotriazole, 2-(2-hydroxy-3,5-dicumylphenyl)phenylbenzotriazole, 2-(2-hydroxy-3-*tert*-butyl-5-methylphenyl)-5-chlorobenzotriazole, 2,2'-methylenebis[4-(1,1,3,3-tetramethylbutyl)-6-(2*H*-benzotriazol-2-yl)phenol], 2-(2-hydroxy-3,5-di-*tert*-butylphenyl)benzotriazole, 2-(2-hydroxy-3,5-di-*tert*-butylphenyl)-5-chlorobenzotriazole, 2-(2-hydroxy-3,5-di-*tert*-amylphenyl)benzotriazole, 2-(2-hydroxy-5-*tert*-octylphenyl)-2*H*-benzotriazole, 2-(2-hydroxy-5-*tert*-butylphenyl)benzotriazole, 2-(2-hydroxy-4-octoxyphenyl)benzotriazole, 2,2'-methylenebis(4-cumyl-6-benzotriazole-phenyl), 2,2'-*p*-phenylenebis(1,3-benzoxazin-4-one), and 2-[2-hydroxy-3-(3,4,5,6-tetrahydrophthalimidomethyl)-5-methylphenyl]benzotriazole; and a polymer having a 2-hydroxyphenyl-2*H*-benzotriazole skeleton, such as a copolymer of 2-(2-hydroxy-5-methacryloxyethyl-phenyl)-2*H*-benzotriazole and a vinyl-based monomer that is copolymerizable with the monomer, or a copolymer of 2-(2'-hydroxy-5-acryloxyethylphenyl)-2*H*-benzotriazole and a vinyl-based monomer that is copolymerizable with the monomer.

In the present invention, one kind of (B) the UV absorbers may be used alone, or two or more kinds thereof may be used in combination. A benzophenone-based UV absorber and a benzotriazole-based UV absorber are each used as (B) the UV absorber, and it is preferred that each of the benzophenone-based UV absorber and the benzotriazole-based UV absorber be used alone, or both the absorbers be used in combination.

The blending amount of (B) the UV absorber in the polycarbonate resin composition of the present invention needs to be from 0.001 part by mass to 1 part by mass with respect to 100 parts by mass of (A) the polycarbonate-based resin, and is preferably from 0.005 part by mass to 0.7 part by mass, more preferably from 0.01 part by mass to

0.5 part by mass. The case where the content of the component (B) is less than 0.001 part by mass is not preferred because the molded body undergoes coloring, such as yellowing, when used for a long time period in the outdoors, and the case where the content of the component (B) is more than 1 part by mass is also not preferred because the effect of the blending reaches the ceiling and the contamination of a die may occur at the time of the molding of the molded body.

[(C) Antioxidant]

The polycarbonate resin composition to be used for obtaining the molded body for outdoor installation of the present invention is desirably blended with an antioxidant as a component (C). The blending of the antioxidant can prevent the discoloration of the composition and a reduction in molecular weight thereof at the time of its molding. Examples of (C) the antioxidant include a phosphorus-based antioxidant, a sulfur-based antioxidant, and a phenol-based antioxidant.

The phosphorus-based antioxidant is not particularly limited. Typical examples thereof include: tris(nonylphenyl) phosphite; 2-ethylhexyl diphenyl phosphite; trialkyl phosphites, such as trimethyl phosphite, triethyl phosphite, tributyl phosphite, trioctyl phosphite, trinonyl phosphite, tridecyl phosphite, trioctadecyl phosphite, distearyl pentaerythrityl diphosphite, tris(2-chloroethyl) phosphite, and tris(2,3-dichloropropyl) phosphite; tricycloalkyl phosphites, such as tricyclohexyl phosphite; triaryl phosphites, such as triphenyl phosphite, tricresyl phosphite, tris(ethylphenyl) phosphite, tris(butylphenyl) phosphite, tris(hydroxyphenyl) phosphite, and tris(2,4-di-*tert*-butylphenyl) phosphite; trialkyl phosphates, such as trimethyl phosphate, triethyl phosphate, tributyl phosphate, trioctyl phosphate, tridecyl phosphate, trioctadecyl phosphate, distearyl pentaerythrityl diphosphate, tris(2-chloroethyl) phosphate, and tris(2,3-dichloropropyl) phosphate; tricycloalkyl phosphates, such as tricyclohexyl-1-phosphate; and triaryl phosphates such as triphenyl phosphate, tricresyl phosphate, tris(nonylphenyl) phosphate, and 2-ethylphenyl diphenyl phosphate. Among them, triaryl phosphites and triaryl phosphates are suitably used.

The sulfur-based antioxidant is not particularly limited. Typical examples thereof include dilauryl 3,3'-thiodipropionate, ditridecyl 3,3'-thiodipropionate, dimyristyl 3,3'-thiodipropionate, distearyl 3,3'-thiodipropionate, lauryl stearyl 3,3'-thiodipropionate, pentaerythritol tetrakis(3-laurylthiopropionate), pentaerythritol tetrakis(3-mercaptopropionate), glycerol-3-stearylthiopropionate, bis[2-methyl-4-(3-laurylthiopropionyloxy)-5-tert-butylphenyl] sulfide, octadecyl disulfide, mercaptobenzimidazole, 2-mercapto-6-methylbenzimidazole, 1,1'-thiobis(2-naphthol), and tetrakis[methylene-3-(dodecylthio)propionate]-methane. Among them, pentaerythritol tetrakis(3-laurylthiopropionate) and tetrakis-[methylene-3-(dodecylthio)propionate]methane are preferred.

The phenol-based antioxidant is not particularly limited, and a hindered phenol-based antioxidant is suitably used. Typical examples thereof include triethylene glycol-bis[3-(3-*tert*-butyl-5-methyl-4-hydroxyphenyl)propionate], 1,6-hexanediol-bis[3-(3,5-di-*tert*-butyl-4-hydroxyphenyl)propionate], pentaerythritol-tetrakis[3-(3,5-di-*tert*-butyl-4-hydroxyphenyl)-propionate], octadecyl-3-(3,5-di-*tert*-butyl-4-hydroxyphenyl)propionate, 1,3,5-trimethyl-2,4,6-tris(3,5-di-*tert*-butyl-4-hydroxybenzyl)benzene, *N*,*N*'-hexamethylenebis[(3,5-di-*tert*-butyl-4-hydroxy)-hydrocinnamide], 3,5-di-*tert*-butyl-4-hydroxy-benzyl phosphonate-diethyl ester, tris(3,5-di-tert-butyl-4-hydroxybenzyl) isocyanurate, tetrakis(2,4-di-*tert*-butylphenyl) 4,4'-biphenylenediphosphinate, 3,9-bis{1,1-dimethyl-2-[β-(3-*tert*-butyl-4-hydroxy-5-methylphenyl)propionyloxy]ethyl}-2,4,8,10-tetraoxaspiro(5,5)undecane, 2,2-thio-diethylenebis[3-(3,5-di-*tert*-butyl-4-hydroxyphenyl)propionate],2,4-bis(*n*-octylthio)-6-(4-hydroxy-3,5-di-*tert*-butylanilino)-1,3,5-triazine, and calcium bis(ethyl 3,5-di-*tert*-butyl-4-hydroxybenzylphosphonate).

Among those compounds, octadecyl-3-(3,5-di-tert-butyl-4-hydroxyphenyl)-propionate, pentaerythritol-tetrakis[3-(3,5-di-*t*-butyl-4-hydroxyphenyl)propionate], 1,6-hexanediol-bis[3-(3,5-di-tert-butyl-4-hydroxyphenyl)propionate], 1,3,5-trimethyl-2,4,6-tris(3,5-di-*tert*-butyl-4-hydroxybenzyl)benzene, and the like are preferred, and pentaerythritol-tetrakis[3-(3,5-di-*t*-butyl-4-hydroxyphenyl)propionate] is more preferred.

In the present invention, when (C) the antioxidant is used, one kind of the antioxidants may be used alone, or two or more kinds thereof may be used in combination. A phosphorus-based antioxidant is preferably used as (C) the antioxidant, and it is more preferred that the phosphorus-based antioxidant be used alone, or the phosphorus-based antioxidant and a sulfur-based antioxidant and/or a phenol-based antioxidant be used in combination.

The blending amount of (C) the antioxidant is desirably from 0.001 part by mass to 2 parts by mass with respect to 100 parts by mass of (A) the polycarbonate-based resin, and is preferably from 0.005 part by mass to 1 part by mass, more preferably from 0.01 part by mass to 0.5 part by mass. When the blending amount of (C) the antioxidant falls within the range, the discoloration and the reduction in molecular weight at the time of the molding can be prevented, and an antioxidant effect can be improved.

[Other Component]

Any other component can appropriately be incorporated into the polycarbonate resin composition to be used for obtaining the molded body for outdoor installation of the present invention to the extent that the effects of the present

invention are not remarkably impaired.

Examples of the other component include additives, such as a flame retardant, a flame retardant aid, an inorganic filler, a release agent, and colorants (a dye and a pigment).

The flame retardant is not particularly limited as long as the flame retardant has an improving effect on the flame retardancy of the molded body within the range of the effects of the present invention, and suitable examples thereof include various known flame retardants, such as a halogen-based flame retardant, a phosphorus-based flame retardant, and a metal salt-based flame retardant. Among those various known flame retardants, a metal salt-based flame retardant, especially an organometallic salt-based compound is preferably used. Examples of the organometallic salt-based compound may include organic alkali metal salts and/or organic alkaline earth metal salts, and examples of the salts include various salts. Among them, an alkali metal salt and an organic alkaline earth metal salt of an organic acid or an organic acid ester having at least one carbon atom can be used.

Here, the organic acid or the organic acid ester is, for example, an organic sulfonic acid or an organic carboxylic acid. Meanwhile, the alkali metal is, for example, lithium, sodium, potassium, or cesium, and the alkaline earth metal is, for example, magnesium, calcium, strontium, or barium. Among them, a salt of sodium or potassium is preferably used. In addition, an organic acid salt thereof may be substituted with a halogen, such as fluorine, chlorine, or bromine. One kind of the alkali metal salts and the organic alkaline earth metal salts may be used alone, or two or more kinds thereof may be used in combination. In the case of, for example, an organic sulfonic acid, an alkali metal salt and an alkaline earth metal salt of a perfluoroalkanesulfonic acid described in JP 47-40445 B out of the various organic alkali metal salts and the various organic alkaline earth metal salts are preferably used. Examples of the perfluoroalkanesulfonic acid may include perfluoro-methanesulfonic acid, perfluoroethanesulfonic acid, perfluoropropanesulfonic acid, perfluorobutanesulfonic acid, perfluoromethylbutanesulfonic acid, perfluorohexanesulfonic acid, perfluoroheptanesulfonic acid, and perfluorooctanesulfonic acid. In particular, a potassium salt of any such perfluoroalkanesulfonic acid is preferably used.

Examples thereof may also include: an alkylsulfonic acid, benzenesulfonic acid, an alkylbenzenesulfonic acid, diphenylsulfonic acid, naphthalenesulfonic acid, 2,5-dichloro-benzenesulfonic acid, 2,4,5-trichlorobenzenesulfonic acid, diphenyl sulfone-3-sulfonic acid, diphenyl sulfone-3,3'-disulfonic acid, and naphthalenetrisulfonic acid, and fluorine-substituted products thereof; and an alkali metal salt or an alkaline earth metal salt of an organic sulfonic acid, such as polystyrenesulfonic acid. In particular, a perfluoroalkanesulfonic acid and diphenylsulfonic acid are each preferred as the organic sulfonic acid. In addition, when the organic alkali metal salt and/or the organic alkaline earth metal salt are each/is used as the flame retardant, the flame retardant is preferably blended in an amount of from 0.01 part by mass to 0.15 part by mass with respect to 100 parts by mass of the component (A).

The flame retardant aid is preferably used in combination with the flame retardant, and a polytetrafluoroethylene (PTFE) or an antimony oxide compound can be used. Among them, the PTFE is preferably used and a PTFE having a fibril-forming ability is desirably used. Mixed powder formed of PTFE particles and organic polymer particles is also desirably used. Specific examples of the monomer for producing the organic polymer particles may include: a styrene-based monomer; a (meth)acrylic acid alkyl ester-based monomer; a vinyl cyanide-based monomer; a vinyl ether-based monomer; a vinyl carboxylate-based monomer; an olefin-based monomer; and a diene-based monomer. In particular, a (meth)acrylic acid alkyl ester-based monomer is preferably used. The (meth)acrylic acid alkyl ester-based monomer refers to both an acrylic acid alkyl ester-based monomer and a methacrylic acid alkyl ester-based monomer.

The polymerization of any such monomer provides the organic polymer particles. One kind of the monomers may be used alone, or two or more kinds thereof may be used as a mixture. The organic polymer particles are preferably particles each formed of a (meth)acrylic acid alkyl ester-based copolymer. When the PTFE particles are, or the mixed powder formed of the PTFE particles and the organic polymer particles is, used as the flame retardant aid, the flame retardant aid is preferably blended in an amount of from 0.1 part by mass to 1 part by mass with respect to 100 parts by mass of the component (A).

Examples of the inorganic filler may include talc, mica, kaolin, diatomaceous earth, calcium carbonate, calcium sulfate, barium sulfate, glass fibers, carbon fibers, and potassium titanate fibers. Among them, a plate-shaped filler, such as talc or mica, or a fibrous filler, such as glass fibers or carbon fibers, is preferred.

An inorganic filler that blocks light cannot be used for obtaining the transparency of the molded body, but the transparency can be obtained by using an inorganic filler that transmits light, such as glass fibers. When the transparency is obtained by using the glass fibers, the following glass fibers are preferably used: a difference in refractive index between (A) the polycarbonate resin and each of the glass fibers is 0.02 or less. In addition, the use of glass fibers whose sections have flat shapes as the glass fibers can improve the dimensional stability of a molded article to be obtained.

For example, a fatty acid ester, polyolefin-based wax, fluorine oil, or paraffin wax may be used as the release agent. Among them, a fatty acid ester is preferred. Preferred examples thereof include partial esters, such as stearic acid monoglyceride, stearic acid diglyceride, stearic acid monosorbitate, behenic acid monoglyceride, pentaerythritol monostearate, pentaerythritol distearate, propylene glycol monostearate, and sorbitan monostearate.

Examples of the colorant include dyes, such as a perylene-based dye, a coumarin-based dye, a thioindigo-based dye, an anthraquinone-based dye, a thioxanthone-based dye, a ferrocyanide, a perinone-based dye, a quinoline-based dye, and a phthalocyanine-based dye.

Next, a method of producing the polycarbonate resin composition to be used for obtaining the molded body for outdoor installation of the present invention is described.

The polycarbonate resin composition to be used for obtaining the molded body for outdoor installation of the present invention is obtained by blending the respective components (A) and (B) at the foregoing ratios, blending the component (C) to be used as required and any other general component at appropriate ratios, and kneading the mixture.

The blending and kneading in this case may be performed by a method involving premixing with a typically used apparatus, such as a ribbon blender or a drum tumbler, and using, for example, a Henschel mixer, a Banbury mixer, a single-screw extruder, a twin-screw extruder, a multi-screw extruder, or a co-kneader.

In normal cases, a heating temperature at the time of the kneading is appropriately selected from the range of from 240°C to 300°C.

The components to be incorporated except (A) the polycarbonate-based resin can be added in advance by being melt-kneaded together with (A) the polycarbonate-based resin, i.e., as a master batch.

The molded body for outdoor installation of the present invention is obtained by molding the polycarbonate resin composition produced as described above.

The molded body for outdoor installation of the present invention can be obtained through molding using, as a raw material, the composition obtained by melt-kneading the polycarbonate resin composition produced as described above by using the melt-kneading and molding machine or a pellet obtained from the composition, by an injection molding method, an injection compression molding method, an extrusion molding method, a blow molding method, a press molding method, a vacuum molding method, an expansion molding method, and the like.

The molded body for outdoor installation can be particularly suitably obtained by producing a pellet-shaped molding raw material by the melt-kneading method, and then subjecting the pellet to injection molding or injection compression molding.

A gas injection molding method for preventing a sink mark on the external appearance of the molded body or for reducing the weight thereof can be adopted as the injection molding method.

The molded body for outdoor installation of the present invention can be prevented from reducing in impact resistance when used for a long time period in the outdoors, and is hence excellent in impact resistance retention ratio. In addition, the molded body is excellent in impact resistance at low temperature and can prevent the yellowing of a molded article at the time of molding. Further, a molded body for outdoor installation excellent in wet heat stability can be provided. The molded body for outdoor installation thus obtained can be suitably used in, for example, an outdoor electrical and electronic storage box, such as an information communication box, a junction box for photovoltaic power generation, a solar water heater housing, a wattmeter cover, an air conditioner outdoor unit housing, or an outer frame for a signboard or an advertisement pillar where an extremely high impact characteristic and extremely high heat resistance are required.

## EXAMPLES

The present invention is described in more detail by way of Examples. However, the present invention is by no means limited by these Examples.

[Preparation Example 1]

<Production of Polycarbonate Oligomer>

Sodium dithionite was added in an amount of 2,000 ppm with respect to bisphenol A (BPA) to be dissolved later to 5.6 mass% aqueous sodium hydroxide, and then bisphenol A was dissolved in the mixture so that the concentration of bisphenol A was 13.5 mass%. Thus, a solution of bisphenol A in aqueous sodium hydroxide was prepared.

The solution of bisphenol A in aqueous sodium hydroxide, methylene chloride, and phosgene were continuously passed through a tubular reactor having an inner diameter of 6 mm and a tube length of 30 m at flow rates of 40 L (L is hereinafter used as an abbreviation of liter(s))/hr, 15 L/hr, and 4.0 kg/hr, respectively.

The tubular reactor had a jacket portion and the temperature of the reaction liquid was kept at 40°C or less by passing cooling water through the jacket.

The reaction liquid that had exited the tubular reactor was continuously introduced into a baffled vessel type reactor with a sweptback blade and having an internal volume of 40 L. The solution of bisphenol A in aqueous sodium hydroxide, 25 mass% aqueous sodium hydroxide, water, and a 1 mass% aqueous solution of triethylamine were further added to the reactor at flow rates of 2.8 L/hr, 0.07 L/hr, 17 L/hr, and 0.64 L/hr, respectively, to perform a reaction.

An aqueous phase was separated and removed by continuously taking out the reaction liquid overflowing the vessel type reactor and leaving the reaction liquid at rest. Then, a methylene chloride phase was collected.

The polycarbonate oligomer thus obtained had a concentration of 329 g/L and a chloroformate group concentration of 0.74 mol/L.

Production Example 1

<Production of Polycarbonate-polydimethylsiloxane Copolymer (PC-PDMS Copolymer 1)>

15 Liters of the polycarbonate oligomer solution produced in Preparation Example 1, 9.0 L of methylene chloride, 384 g of an o-allylphenol terminal-modified polydimethylsiloxane (PDMS) having an average number n of repetitions of dimethylsiloxane repeating units of 90, and 8.8 mL of triethylamine were loaded into a 50 L vessel type reactor with a baffle board, a paddle type stirring blade, and a cooling jacket. 1,389 g of 6.4 mass% aqueous sodium hydroxide was added to the mixture under stirring to perform a reaction between the polycarbonate oligomer and the allylphenol terminal-modified PDMS for 10 minutes.

A solution of *p-t*-butylphenol (PTBP) in methylene chloride (prepared by dissolving 137 g of PTBP in 2.0 L of methylene chloride) and a solution of bisphenol A in aqueous sodium hydroxide (prepared by dissolving 1,012 g of bisphenol A in an aqueous solution prepared by dissolving 577 g of sodium hydroxide and 2.0 g of sodium dithionite in 8.4 L of water) were added to the polymerization liquid to perform a polymerization reaction for 50 minutes.

10 Liters of methylene chloride was added to the resultant for dilution and then the mixture was stirred for 10 minutes. After that, the mixture was separated into an organic phase containing a polycarbonate-polydimethylsiloxane copolymer (PC-PDMS copolymer), and an aqueous phase containing excess amounts of bisphenol A and sodium hydroxide, and then the organic phase was isolated.

The solution of the PC-PDMS copolymer in methylene chloride thus obtained was sequentially washed with 0.03 mol/L aqueous sodium hydroxide and 0.2 mol/L hydrochloric acid in amounts of 15 vol% each with respect to the solution. Next, the solution was repeatedly washed with pure water until an electric conductivity in an aqueous phase after the washing became 0.01 $\mu$S/m or less.

The solution of the PC-PDMS copolymer in methylene chloride obtained by the washing was concentrated and pulverized, and then the resultant flake was dried under reduced pressure at 120°C. Thus, a PC-PDMS copolymer 1 was produced.

The resultant PC-PDMS copolymer 1 had a PDMS block moiety content determined by nuclear magnetic resonance (NMR) of 6.0 mass%, a viscosity number of 49.5, and a viscosity-average molecular weight Mv of 18,500.

Production Example 2

<Production of Polycarbonate-polydimethylsiloxane Copolymer (PC-PDMS Copolymer 2)>

A PC-PDMS copolymer 2 was produced in the same manner as in Production Example 1 except that in Production Example 1, an o-allylphenol terminal-modified PDMS having an average number n of repetitions of dimethylsiloxane repeating units of 150 was used, and its usage amount was changed to 224 g.

The resultant PC-PDMS copolymer 2 had a PDMS block moiety content determined by NMR of 3.5 mass%, a viscosity number measured in conformity with ISO 1628-4 (1999) of 48.2, and a viscosity-average molecular weight Mv of 18,000.

Production Example 3

<Production of Polycarbonate-polydimethylsiloxane Copolymer (PC-PDMS Copolymer 3)>

A PC-PDMS copolymer 3 was produced in the same manner as in Production Example 1 except that in Production Example 1, an o-allylphenol terminal-modified PDMS having an average number of repetitions of dimethylsiloxane repeating units of 300 was used, and its usage amount was changed to 326 g.

The resultant PC-PDMS copolymer 3 had a PDMS block moiety content determined by NMR of 5.1 mass%, a viscosity number of 49.5, and a viscosity-average molecular weight Mv of 18,500.

Production Example 4

<Production of Polycarbonate-polydimethylsiloxane Copolymer (PC-PDMS Copolymer 4)>

15 Liters of the polycarbonate oligomer solution produced in Preparation Example 1, 9.0 L of methylene chloride, 384 g of an o-allylphenol terminal-modified PDMS having an average number n of repetitions of dimethylsiloxane repeating

units of 90, and 8.8 mL of triethylamine were loaded into a 50 L vessel type reactor with a baffle board, a paddle type stirring blade, and a cooling jacket. 1,389 Grams of 6.4 mass% aqueous sodium hydroxide was added to the mixture under stirring to perform a reaction between the polycarbonate oligomer and the allylphenol terminal-modified PDMS for 10 minutes.

A solution of *p-t*-butylphenol (PTBP) in methylene chloride (prepared by dissolving 132 g of PTBP in 2.0 L of methylene chloride) and a solution of bisphenol A in aqueous sodium hydroxide (prepared by dissolving 1,012 g of bisphenol A in an aqueous solution prepared by dissolving 577 g of sodium hydroxide and 2.0 g of sodium dithionite in 8.4 L of water) were added to the polymerization liquid to perform a polymerization reaction for 50 minutes.

10 Liters of methylene chloride was added to the resultant for dilution and the mixture was stirred for 10 minutes. After that, the mixture was separated into an organic phase containing a PC-PDMS copolymer, and an aqueous phase containing excess amounts of bisphenol A and sodium hydroxide, and the organic phase was isolated.

The solution of the PC-PDMS copolymer in methylene chloride thus obtained was sequentially washed with 0.03 mol/L aqueous sodium hydroxide and 0.2 mol/L hydrochloric acid in amounts of 15 vol% each with respect to the solution. Next, the solution was repeatedly washed with pure water until an electric conductivity in an aqueous phase after the washing became 0.01 μS/m or less.

The solution of the PC-PDMS copolymer in methylene chloride obtained by the washing was concentrated and pulverized, and the resultant flake was dried under reduced pressure at 120°C. Thus, a PC-PDMS copolymer 4 was produced.

The resultant PC-PDMS copolymer 4 had a PDMS block moiety content determined by NMR of 6.0 mass%, a viscosity number of 48.2, and a viscosity-average molecular weight Mv of 18,000.

Production Example 5

<Production of Polycarbonate-polydimethylsiloxane Copolymer (PC-PDMS Copolymer 5)>

A PC-PDMS copolymer 5 was produced in the same manner as in Production Example 4 except that in Production Example 4, an o-allylphenol terminal-modified PDMS having an average number n of repetitions of dimethylsiloxane repeating units of 110 was used, and its usage amount was changed to 224 g.

The resultant PC-PDMS copolymer 5 had a PDMS block moiety content determined by NMR of 3.5 mass%, a viscosity number of 49.5, and a viscosity-average molecular weight Mv of 18,500.

Production Example 6

<Production of Polycarbonate-polydimethylsiloxane Copolymer (PC-PDMS Copolymer 6)>

A PC-PDMS copolymer 6 was produced in the same manner as in the PC-PDMS copolymer 4 except that in Production Example 4, an o-allylphenol terminal-modified PDMS having an average number n of repetitions of dimethylsiloxane repeating units of 40 was used, and its usage amount was changed to 224 g.

The resultant PC-PDMS copolymer 6 had a PDMS block moiety content determined by NMR of 3.5 mass%, a viscosity number of 47.5, and a viscosity-average molecular weight Mv of 17,700.

Production Example 7

<Production of Polycarbonate-polydimethylsiloxane Copolymer (PC-PDMS Copolymer 7)>

A PC-PDMS copolymer 7 was produced in the same manner as in the PC-PDMS copolymer 4 except that in Production Example 4, an o-allylphenol terminal-modified PDMS having an average number n of repetitions of dimethylsiloxane repeating units of 40 was used, and its usage amount was changed to 384 g.

The resultant PC-PDMS copolymer 7 had a PDMS block moiety content determined by NMR of 6.0 mass%, a viscosity number of 47.5, and a viscosity-average molecular weight Mv of 17,700.

Production Example 8

<Production of Polycarbonate-polydimethylsiloxane Copolymer (PC-PDMS Copolymer 8)>

A PC-PDMS copolymer 8 was produced in the same manner as in Production Example 6 except that in Production Example 6, an o-allylphenol terminal-modified PDMS having an average number n of repetitions of dimethylsiloxane repeating units of 40 was used, its usage amount was changed to 1,088 g, and the usage amount of PTBP was

changed to 132 g.

The resultant PC-PDMS copolymer 8 had a PDMS block moiety content determined by NMR of 17.0 mass%, a viscosity number of 47.5, and a viscosity-average molecular weight Mv of 17,700.

Production Example 9

<Production of Polycarbonate-polydimethylsiloxane Copolymer (PC-PDMS Copolymer 9)>

A PC-PDMS copolymer 9 was produced in the same manner as in Production Example 1 except that in Production Example 1, an o-allylphenol terminal-modified polydimethylsiloxane (PDMS) having an average number n of repetitions of dimethylsiloxane repeating units of 200 was used as the o-allylphenol terminal-modified PDMS, and its usage amount was changed to 307 g.

The resultant PC-PDMS copolymer 9 had a PDMS block moiety content determined by NMR of 4.8 mass%, a viscosity number of 47.5, and a viscosity-average molecular weight Mv of 17,700.

The PDMS average repetition number of the allylphenol terminal-modified polydimethylsiloxane used at the time of the production of each of the PC-PDMS copolymers 1 to 9, the usage amount of the PDMS, and the usage amount of *p*-*t*-butylphenol (PTBP), and the content of the PDMS block moiety, viscosity number, and viscosity-average molecular weight Mv of the resultant polycarbonate-polydimethylsiloxane copolymer are shown in Table 1. The viscosity numbers measured in Production Examples of the present invention are values measured in conformity with ISO 1628-4 (1999).

Table 1

| | Production Examples | | | | | | | | |
|---|---|---|---|---|---|---|---|---|---|
| | 1 | 2 | 3 | 4 | 5 | 6 | 7 | 8 | 9 |
| PC-PDMS copolymer | 1 | 2 | 3 | 4 | 5 | 6 | 7 | 8 | 9 |
| PDMS average repetition number | 90 | 150 | 300 | 90 | 110 | 40 | 40 | 40 | 20 |
| PDMS usage amount (g) | 384 | 224 | 326 | 384 | 224 | 224 | 384 | 1,088 | 307 |
| PTBP usage amount (g) | 132 | 132 | 132 | 137 | 137 | 137 | 137 | 132 | 132 |
| PDMS block moiety content (mass%) | 6.0 | 3.5 | 5.1 | 6.0 | 3.5 | 3.5 | 6.0 | 17.0 | 4.8 |
| Viscosity number | 49.5 | 48.2 | 49.5 | 48.2 | 49.5 | 47.5 | 47.5 | 47.5 | 47.5 |
| Viscosity-average molecular weight Mv | 18,500 | 18,000 | 18,500 | 18,000 | 18,500 | 17,700 | 17,700 | 17,700 | 17,700 |

Examples 1 to 8 and Comparative Examples 1 to 5

Respective components were mixed at ratios shown in Table 2 [a numerical value for each component in the table represents its part(s) by mass in a resin composition], and the mixture was granulated with a vented single-screw extruder having a diameter of 50 mm at a resin temperature of 280°C to provide a pellet.

The used molding materials and methods for the performance evaluations of a molded body are described next. In addition, (1) the viscosity-average molecular weight Mv of (A) the polycarbonate-based resin [(A-1) + (A-2)], (2) the content (x) of the PDMS block moiety in (A) the polycarbonate-based resin [(A-1) + (A-2)], (3) the product [(n) × (x)] of the average number n of repetitions of the siloxane repeating units in the polyorganosiloxane block and the content x of the polyorganosiloxane block, and (4) the results of the performance evaluations of the molded body are shown in Table 2.

Details of the respective components used in Examples and Comparative Examples are as described below.

(A-1) Polycarbonate-polydimethylsiloxane copolymer

Polycarbonate-polydimethylsiloxane copolymers described in Production Examples 1 to 9

(A-2) Aromatic polycarbonate resin

Bisphenol A polycarbonate having *p*-*t*-butylphenol as a terminal group (trade name; TARFLON FN1900A, manufactured by Idemitsu Kosan Co., Ltd., viscosity number: 49.5, viscosity-average molecular weight Mv = 18,500)

(B) UV absorber

Benzotriazole-based UV absorber 2-(2-Hydroxy-5-*tert*-octylphenyl)-2*H*-benzotriazole, manufactured by Shipro Kasei Kaisha, Ltd., trade name: "SEESORB 709" (benzotriazole-based UV absorber)

(C) Antioxidant

Tris(2,4-di-*t*-butylphenyl) phosphite (trade name; IRGAFOS 168, manufactured by BASF Japan Ltd.)

[Performance Evaluations]

The pellet obtained by the foregoing method was subjected to injection molding with an injection molding machine (model number; IS100EN, manufactured by Toshiba Machine Co., Ltd.) under the molding conditions of a cylinder temperature of 280°C and a die temperature of 80°C to provide a test piece. The following measurements were performed by using the resultant test piece.

(1) Impact Test (Impact Strength)

A test piece having a thickness of 3.2 mm was subjected to notched Izod impact tests at 23°C and -30°C in conformity with ASTM D256.

(2) Weatherability Test

(2-1) Impact Strength Retention Ratio

A test piece having a thickness of 3.2 mm was subjected to notched Izod impact tests at 23°C before and after a 3,000-hour weatherability test in conformity with ASTM D256, and its Izod impact strength retention ratio (%) was determined from the following equation. Impact strength retention ratio (%) = notched Izod impact strength at 23°C after 3,000-hour weatherability test/notched Izod impact strength at 23°C before 3,000-hour weatherability test The 3,000-hour weatherability test was performed by the following method.

The notched Izod impact test piece was left to stand in Sunshine Weather Meter S80 (manufactured by Suga Test Instruments Co., Ltd.) set to a black panel temperature of 63°C, a humidity of 50%, a rainfall cycle of 12/60 minutes (a rainfall duration was 12 minutes out of 60 minutes), and an irradiation intensity (from 300 nm to 700 nm) of 255 $W/m^2$ so that the notch side of the test piece was irradiated with light, and the test piece was removed after a lapse of 3,000 hours.

(2-2) Color Tone Change (ΔYI)

The pellet obtained by the foregoing method was subjected to injection molding under the molding conditions of a cylinder temperature of 280°C and a die temperature of 80°C to provide a three-stage plate having a width of 50 mm, a length of 85 mm, and thicknesses of 3.0 mm (length: 40.0 mm), 2.0 mm (length: 22.5 mm), and 1.0 mm (length: 22.5 mm) from its gate side. The plate was subjected to a 3,000-hour weatherability test in the same manner as in the foregoing, and a change (ΔYI) in YI value of the 3.0-millimeter portion after the weatherability test as compared with that before the test was determined. The YI values were each measured with a spectral colorimeter Σ90 manufactured by Nippon Denshoku Industries Co., Ltd. by a reflection method under the conditions of a measurement area of 30 φ and a C2 light source.

(3) Impact Strength Retention Ratio in Wet Heat Resistance Test

A test piece having a thickness of 3.2 mm was subjected to notched Izod impact tests at 23°C before and after

a 1,000-hour wet heat test in conformity with ASTM D256, and its Izod impact strength retention ratio (%) was determined from the following equation.

Impact strength retention ratio (%) = notched Izod impact strength at 23°C after 1,000-hour wet heat test/notched Izod impact strength at 23°C before 1,000-hour wet heat test

The 1,000-hour wet heat test was performed by a method involving leaving the test piece to stand under an environment having a temperature of 85°C and a humidity of 85%RH, and removing the test piece after a lapse of 1,000 hours.

(4) Reduction in Mv after Molding Residence

The pellet obtained by the foregoing method was subjected to a residence heat stability test as described below by injection molding, the viscosity-average molecular weight Mv of a molded article at a residence time of 5 minutes was measured, and a reduction in Mv after molding residence was determined from a difference between the measured Mv and a Mv at the time of the pellet.

<Injection Molding>

Injection molding machine: EC40N (trade name) manufactured by Toshiba Machine Co., Ltd.
Molded article shape: 80 mm x 40 mm x 3.2 mm
Cylinder temperature of molding machine: 380°C
Residence time in cylinder: 5 min
Die temperature: 80°C

(5) Total Light Transmittance: Transparency

The pellet obtained by the foregoing method was subjected to injection molding under the molding conditions of a cylinder temperature of 280°C and a die temperature of 80°C to provide a three-stage plate having a width of 50 mm, a length of 85 mm, and thicknesses of 3.0 mm (length: 40.0 mm), 2.0 mm (length: 22.5 mm), and 1.0 mm (length: 22.5 mm) from its gate side. The total light transmittance of the portion having a thickness of 3.0 mm from the gate side was measured in conformity with JIS K 7105. The total light transmittance was measured with NDH2000 manufactured by Nippon Denshoku Industries Co., Ltd. under the conditions of a measurement area of 30 φ and a C2 light source.

A larger value for the total light transmittance means that the plate is more excellent in transparency.

(6) UL 94 Combustibility: Flame Retardancy Test

The pellet obtained by the foregoing method was subjected to injection molding with an injection molding machine (model number; EC75PNII, manufactured by Toshiba Machine Co., Ltd.) under the molding conditions of a cylinder temperature of 280°C and a die temperature of 80°C to produce a test piece measuring 127 by 12.7 by 1.5 mm. The flame retardancy of the test piece was measured in conformity with a UL94 vertical flame retardancy test (Underwriters Laboratory Subject 94), and was evaluated by being classified into any one of V-0, V-1, and V-2.

The results of the test are shown in Table 2.

Table 2

| | | | Examples | | | | | | | | Comparative Examples | | | | |
|---|---|---|---|---|---|---|---|---|---|---|---|---|---|---|---|
| | | | 1 | 2 | 3 | 4* | 5 | 6 | 7* | 8 | 1 | 2 | 3 | 4 | 5 |
| (A-1) | Production Example 1 (n=90) | Part(s) by mass | 100 | - | - | - | 100 | 80 | - | - | - | - | - | - | - |
| | Production Example 2 (n=150) | Part(s) by mass | - | 100 | - | - | - | - | - | - | - | - | - | - | 40 |
| | Production Example 3 (n=300) | Part(s) by mass | - | - | - | - | - | - | - | 100 | - | - | - | - | - |
| | Production Example 4 (n=90) | Part(s) by mass | - | - | 80 | - | - | - | - | - | - | - | - | - | - |
| | Production Example 5 (n=110) | Part(s) by mass | - | - | - | 100 | - | - | - | - | - | - | - | - | - |
| | Production Example 6 (n=40) | Part(s) by mass | - | - | - | - | - | - | - | - | - | - | - | 100 | - |
| | Production Example 7 (n=40) | Part(s) by mass | - | - | - | - | - | - | 100 | - | - | 100 | - | - | - |
| | Production Example 8 (n=40) | Part(s) by mass | - | - | - | - | - | - | - | - | 100 | - | - | - | - |
| | Production Example 9 (n=20) | Part(s) by mass | - | - | - | - | - | - | - | - | - | - | 100 | - | - |
| (A-2) | TARFLON FN1900A | Part(s) by mass | 0 | 0 | 20 | 0 | 0 | 20 | 0 | 0 | 0 | 0 | 0 | 0 | 60 |
| (B) | UV absorber | Part(s) by mass | 0.3 | 0.3 | 0.3 | 0.3 | 0.3 | 0.3 | 0.3 | 0.3 | 0.3 | 0 | 0.3 | 0.3 | 0.3 |
| (C) | Antioxidant | Part(s) by mass | 0.1 | 0.1 | 0.1 | 0.1 | 0 | 0.05 | 0.1 | 0.1 | 0.1 | 0.1 | 0.1 | 0.1 | 0.1 |
| Viscosity-average molecular weight Mv of component (A) [(A-1)+(A-2)] | | | 18,500 | 18,000 | 18,100 | 18,500 | 18,500 | 18,500 | 17,700 | 18,500 | 17,700 | 17,700 | 17,700 | 17,700 | 18,300 |
| PDMS block moiety content x in component (A) [(A-1)+(A-2)] | | mass% | 6.0 | 3.5 | 4.8 | 3.5 | 6.0 | 4.8 | 6.0 | 5.1 | 17.0 | 6.0 | 4.8 | 3.5 | 1.4 |
| (n)×(x) | | | 540 | 525 | 432 | 385 | 540 | 432 | 240 | 1,530 | 680 | 240 | 96 | 140 | 210 |
| Evaluation | Notched Izod impact strength (23°C) | kJ/m² | 80 | 74 | 75 | 75 | 77 | 84 | 73 | 68 | 40 | 73 | 74 | 73 | 76 |
| | Notched Izod impact strength 3,000 hours after weatherability test (23°C) | kJ/m² | 66 | 63 | 62 | 63 | 63 | 70 | 46 | 55 | 34 | 43 | 4 | 4 | 15 |
| | Izod impact strength retention ratio | % | 84 | 85 | 84 | 84 | 82 | 84 | 63 | 81 | 85 | 59 | 5 | 5 | 20 |
| | ΔYI | - | 21 | 22 | 21 | 21 | 21 | 21 | 20 | 22 | 20 | 30 | 19 | 20 | 21 |
| | Notched Izod impact strength 1,000 hours after wet heat resistance test (23°C) | kJ/m² | 56 | 52 | 52 | 53 | 57 | 59 | 40 | 48 | 28 | 40 | 5 | 6 | 11 |
| | Izod impact strength retention ratio | % | 71 | 70 | 70 | 70 | 74 | 70 | 55 | 71 | 70 | 55 | 7 | 8 | 14 |
| | Notched Izod impact strength (-30°C) | kJ/m² | 65 | 60 | 63 | 60 | 61 | 64 | 55 | 51 | 41 | 41 | 10 | 15 | 30 |
| | Reduction in Mv after molding residence | - | 300 | 300 | 300 | 300 | 1,400 | 500 | 300 | 300 | 300 | 300 | 300 | 300 | 300 |
| | Total light transmittance | % | 71 | 68 | 71 | 69 | 71 | 70 | 88 | Opaque | 88 | 88 | 89 | 89 | 69 |
| | UL 94 combustibility (1.5 mm) | - | V-2 | V-2 | V-2 | V-2 | V-2 | V-0 | V-2 | V-2 | V-2 | V-2 | V-2 | V-2 | V-2 |

*Reference

As can be seen from Table 2, the molded body obtained by molding the polycarbonate-based resin composition of the present invention is excellent in weatherability, is excellent in impact resistance retention ratio at the time of long-term use in the outdoors and in impact resistance at low temperature, can prevent the yellowing of a molded article at the time of molding, and is excellent in wet heat stability, and is hence suitable for a molded body for outdoor installation.

Meanwhile, as can be seen from Comparative Example 1, when the content of the polysiloxane block in the component (A) is more than 15 mass%, the impact resistance at each of normal temperature (23°C) and low temperature (-30°C) reduces. As can be seen from Comparative Example 5, when the content of the polysiloxane block in the component (A) is less than 2.0 mass%, the impact resistance at low temperature (-30°C) reduces, and the Izod impact strength retention ratios after the weatherability test and after the wet heat stability test largely reduce. As can be seen from each of Comparative Examples 3 and 4, when the product (n) × (x) is less than 200, the Izod impact strength retention ratios after the weatherability test and after the wet heat stability test largely reduce. As can be seen from Comparative Example 3, when the average number n of repetitions is less than 30, the impact resistance at low temperature (-30°C) reduces, and the Izod impact strength retention ratios after the weatherability test and after the wet heat stability test largely reduce.

INDUSTRIAL APPLICABILITY

The molded body for outdoor installation of the present invention can be suitably used in, for example, an outdoor electrical and electronic storage box, a junction box for photovoltaic power generation, a solar water heater housing, an air conditioner outdoor unit housing, a car port roofing material, or an outer frame for a signboard or an advertisement pillar because the molded body is excellent in weatherability, is excellent in impact resistance retention ratio at the time of long-term use in the outdoors and in impact resistance at low temperature, and can prevent the yellowing of a molded article at the time of molding.

## Claims

1. A molded body for outdoor installation, which is obtained by molding a polycarbonate-based resin composition comprising a blend of:

    100 parts by mass of a polycarbonate-based resin (A) comprising

    30 mass% to 100 mass% of a polycarbonate-polyorganosiloxane copolymer (A-1) having a polycarbonate block comprising, in a main chain thereof, a repeating unit represented by the general formula (I), and a polyorganosiloxane block containing a siloxane repeating structure represented by the general formula (II) and having an average number n of repetitions of from 70 to 500, and
    70 mass% to 0 mass% of an aromatic polycarbonate resin (A-2) except the polycarbonate-polyorganosiloxane copolymer (A-1); and

    0.001 part by mass to 1 part by mass of a UV absorber (B),
    wherein the UV absorber (B) is at least one selected from a benzophenone-based UV absorber and a benzotriazole-based UV absorber,
    wherein a content x of the polyorganosiloxane block in the polycarbonate-based resin (A) is from 2.0 mass% to 15.0 mass%, and a product nx of the average number n of repetitions and the content x of the polyorganosiloxane block is 400 or more:

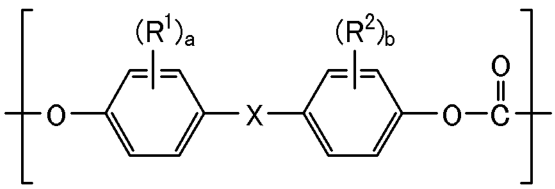

(I)

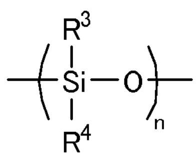

(II)

wherein:

$R^1$ and $R^2$ each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, $-SO_2-$, -O-, or -CO-, and a and b each independently represent an integer of from 0 to 4; and

$R^3$ and $R^4$ each independently represent a hydrogen atom, a halogen atom, an alkyl group having 1 to 6 carbon atoms, an alkoxy group having 1 to 6 carbon atoms, or an aryl group having 6 to 12 carbon atoms, and the average number n of repetitions represents a total number of siloxane repeating units in the polyorganosiloxane block.

**2.** The molded body for outdoor installation according to claim 1, wherein the polycarbonate-based resin composition further comprises 0.001 part by mass to 2 parts by mass of an antioxidant (C) with respect to 100 parts by mass of the polycarbonate-based resin (A).

**3.** The molded body for outdoor installation according to claim 1, wherein the polycarbonate-based resin composition further comprises 0.005 part by mass to 1 part by mass of an antioxidant (C) with respect to 100 parts by mass of the polycarbonate-based resin (A).

**4.** The molded body for outdoor installation according to claim 1, wherein the polycarbonate-based resin composition further comprises 0.01 part by mass to 0.5 part by mass of an antioxidant (C) with respect to 100 parts by mass of the polycarbonate-based resin (A).

**5.** The molded body for outdoor installation according to any one of claims 1 to 4, wherein the polycarbonate-based resin (A) has a viscosity-average molecular weight of from 16,000 to 26,000,
wherein the viscosity-average molecular weight (Mv) is a value calculated from Schnell's equation:

$$[\eta] = 1.23 \times 10^{-5} \times Mv^{0.83}$$

through the measurement of the limiting viscosity [η] of a methylene chloride solution at 20°C with an Ubbelohde-type viscosity tube.

**6.** The molded body for outdoor installation according to any one of claims 1 to 5, wherein the polyorganosiloxane block containing the siloxane repeating structure represented by the general formula (II) is represented by the following general formula (II') or the following general formula (II"):

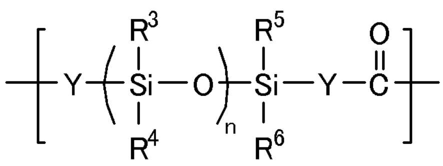

(II')

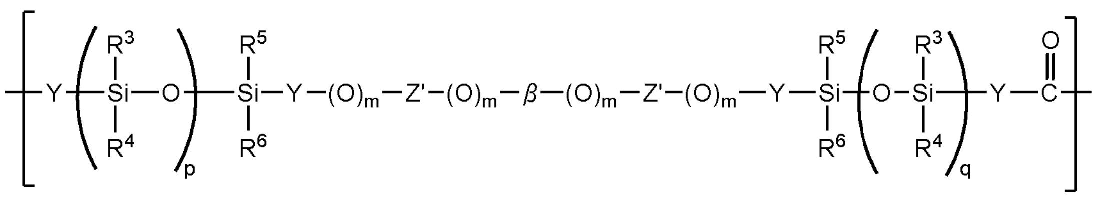

(II")

wherein, in the general formula (II') and the general formula (II"), $R^3$ to $R^6$ each independently represent a hydrogen atom, a halogen atom, an alkyl group having 1 to 6 carbon atoms, an alkoxy group having 1 to 6 carbon atoms, or an aryl group having 6 to 12 carbon atoms, Y represents a single bond, or a divalent organic residue containing

-C(=O)-, an aliphatic group, or an aromatic group, n represents an average number of repetitions of from 70 to 500, Z' represents a single bond, $-R^7O-$, $-R^7COO-$, $-R^7NH-$, -COO-, or -S-, and the $R^7$ represents a linear, branched, or cyclic alkylene group, an aryl-substituted alkylene group that may have an alkoxy group on an aromatic ring thereof, an arylene group, or a diarylene group, β represents a divalent group derived from a diisocyanate compound or a divalent group derived from a dicarboxylic acid, m represents 0 or 1, and a sum of p and q is equal to n, and represents an average number of repetitions of from 70 to 500.

**7.** The molded body for outdoor installation according to any of claims 1 to 6, wherein the content of the aromatic polycarbonate resin (A-2) is from 40 mass% to 0 mass% in the component (A).

**8.** The molded body for outdoor installation according to any of claims 1 to 7, wherein the content of the aromatic polycarbonate resin (A-2) is from 30 mass% to 0 mass% in the component (A).

**9.** The molded body for outdoor installation according to any of claims 1 to 8, wherein the content of the aromatic polycarbonate resin (A-2) is from 20 mass% to 0 mass% in the component (A).

**10.** The molded body for outdoor installation according to any one of claims 1 to 9, wherein the molded body for outdoor installation is selected from an outdoor electrical and electronic storage box, a junction box for photovoltaic power generation, a solar water heater housing, an air conditioner outdoor unit housing, a car port roofing material, and an outer frame for a signboard or an advertisement pillar.

**Patentansprüche**

**1.** Formkörper für Außeninstallation, der erhalten ist durch Formen einer Polycarbonat-basierten Harzzusammensetzung, die folgende Mischung enthält:

100 Masseteile eines Polycarbonat-basierten Harzes (A), enthaltend

30 bis 100 Masse-% eines Polycarbonat-Polyorganosiloxan-Copolymers (A-1) mit einem Polycarbonatblock, der in einer Hauptkette davon eine Wiederholungseinheit mit der allgemeinen Formel (I) enthält, und einem Polyorganosiloxanblock, der eine Siloxan-Wiederholungsstruktur mit der allgemeinen Formel (II) enthält und eine durchschnittliche Zahl n von Wiederholungen von 70 bis 500 hat, und
70 bis 0 Masse-% eines aromatischen Polycarbonatharzes (A-2) mit Ausnahme des Polycarbonat-Polyorganosiloxan-Copolymers (A-1) und

0,001 bis 1 Masseteil eines UV-Absorbers (B),
worin der UV-Absorber (B) zumindest einer ist, ausgewählt aus einem Benzophenon-basierten UV-Absorber und einem Benzotriazol-basierten UV-Absorber,
worin ein Gehalt x des Polyorganosiloxanblocks im Polycarbonat-basierten Harz (A) von 2,0 bis 15,0 Masse-% ist und ein Produkt nx der Durchschnittszahl n von Wiederholungen und des Gehaltes x des Polyorganosiloxanblocks 400 oder mehr ist:

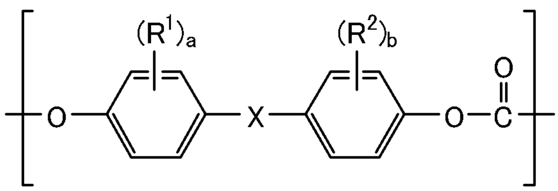

(I)

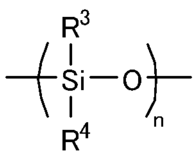

(II)

worin

$R^1$ $R^2$ jeweils unabhängig ein Halogenatom, eine Alkylgruppe mit 1 bis 6 Kohlenstoffatomen oder Alkoxygruppe mit 1 bis 6 Kohlenstoffatomen sind, X eine Einfachbindung, Alkylengruppe mit 1 bis 8 Kohlenstoffatomen, Alkylidengruppe mit 2 bis 8 Kohlenstoffatomen, Cycloalkylengruppe mit 5 bis 15 Kohlenstoffatomen, Cycloalkylidengruppe mit 5 bis 15 Kohlenstoffatomen, Fluorendiylgruppe, Arylalkylengruppe mit 7 bis 15 Kohlenstoffatomen, Arylalkylidengruppe mit 7 bis 15 Kohlenstoffatomen, -S-, -SO-, $-SO_2-$, -O- oder -CO- ist und a und b jeweils unabhängig eine ganze Zahl von 0 bis 4 sind, und
$R^3$ und $R^4$ jeweils unabhängig ein Wasserstoffatom, Halogenatom, Alkylgruppe mit 1 bis 6 Kohlenstoffatomen, Alkoxygruppe mit 1 bis 6 Kohlenstoffatomen oder Arylgruppe mit 6 bis 12 Kohlenstoffatomen sind und die Durchschnittszahl n von Wiederholungen eine Gesamtzahl von Siloxanwiederholungseinheiten im Polyorganosiloxanblock ist.

**2.** Formkörper für Außeninstallation gemäß Anspruch 1, worin die Polycarbonat-basierte Harzzusammensetzung weiterhin 0,001 bis 2 Masseteile eines Antioxidans (C) in Bezug auf 100 Masseteile des Polycarbonat-basierten Harzes (A) enthält.

**3.** Formkörper für Außeninstallation gemäß Anspruch 1 worin die Polycarbonat-basierte Harzzusammensetzung weiterhin 0,005 bis 1 Masseteil eines Antioxidans (C) in Bezug auf 100 Masseteile des Polycarbonat-basierten Harzes (A) enthält.

**4.** Formkörper für Außeninstallation gemäß Anspruch 1 worin die Polycarbonat-basierte Harzzusammensetzung weiterhin 0,01 bis 0,5 Masseteile eines Antioxidans (C) in Bezug auf 100 Masseteile des Polycarbonat-basierten Harzes (A) enthält.

**5.** Formkörper für Außeninstallation gemäß einem der Ansprüche 1 bis 4, worin das Polycarbonat-basierte Harz (A) ein Molekulargewicht im Viskositätsmittel von 16.000 bis 26.000 hat,
worin das viskositätsgemittelte Molekulargewicht (Mv) ein Wert ist, berechnet anhand der Schnellgleichung:

$$[\eta] = 1,23 \times 10^{-5} \times Mv^{0,83}$$

durch Messung der Grenzviskosität [η] einer Methylenchloridlösung bei 20°C mit einem Viskositätsrohr vom Ubbelohde-Typ.

**6.** Formkörper für Außeninstallation gemäß einem der Ansprüche 1 bis 5, worin der Polyorganosiloxanblock mit der Siloxanwiederhholungsstruktur mit der allgemeinen Formel (II) durch die folgende allgemeine Formel (II') oder die folgende allgemeine Formel (II") dargestellt ist:

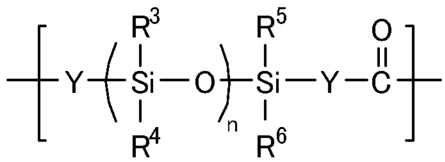

(II')

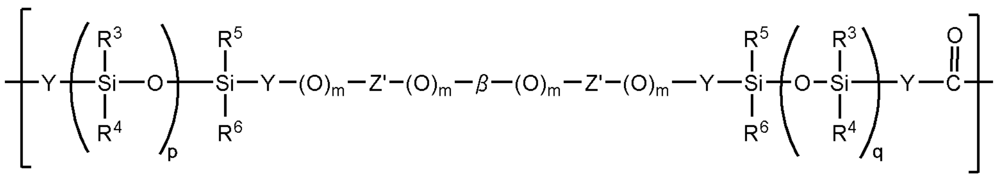

(II")

worin in der allgemeinen Formel (II') und der allgemeinen Formel (II") $R^3$ bis $R^6$ jeweils unabhängig ein Wasserstoffatom, Halogenatom, Alkylgruppe mit 1 bis 6 Kohlenstoffatomen, Alkoxygruppe mit 1 bis 6 Kohlenstoffatomen oder Arylgruppe mit 6 bis 12 Kohlenstoffatomen sind, Y eine Einfachbindung oder ein bivalenter organischer Rest mit -C(=O)-, einer aliphatischen Gruppe oder aromatischen Gruppe ist, n eine Durchschnittszahl von Wiederholungen von 70 bis 500 ist, Z' eine Einfachbindung, $-R^7O-$, $-R^7COO-$. $-R^7NH-$, -COO- oder -S- ist und $R^7$ eine lineare,

verzweigte oder cyclische Alkylengruppe, Aryl-substituierte Alkylengruppe, die eine Alkoxygruppe an einem aromatischen Ring davon haben kann, Arylengruppe oder Diarylengruppe ist, β eine bivalente Gruppe, die von einer Diisocyanatverbindung stammt, oder eine bivalente Gruppe ist, die von einer Dicarbonsäure stammt, m 0 oder 1 ist und eine Summe von p und q gleich n ist und eine Durchschnittszahl von Wiederholungen von 70 bis 500 ist.

**7.** Formkörper für Außeninstallation gemäß einem der Ansprüche 1 bis 6, worin der Gehalt des aromatischen Polycarbonatharzes (A-2) von 40 bis 0 Masse-% in der Komponente (A) ist.

**8.** Formkörper für Außeninstallation gemäß einem der Ansprüche 1 bis 7, worin der Gehalt des aromatischen Polycarbonatharzes (A-2) von 30 bis 0 Masse-% in der Komponente (A) ist.

**9.** Formkörper für Außeninstallation gemäß einem der Ansprüche 1 bis 8, worin der Gehalt des aromatischen Polycarbonatharzes (A-2) von 20 bis 0 Masse-% in der Komponente (A) ist.

**10.** Formkörper für Außeninstallation gemäß einem der Ansprüche 1 bis 9, worin der Formkörper für Außeninstallation ausgewählt ist aus einer elektrischen und elektronischen Speicherbox für außen, eine Anschlussbox für photovoltaische Energieerzeugung, ein Solarwasser-Erwärmungsgehäuse, ein Klimaanlageneinheitsgehäuse für außen, ein Carport-Dachmaterial und einem Außenrahmen für ein Firmenschild oder eine Werbesäule.

**Revendications**

**1.** Corps moulé pour une installation extérieure, qui est obtenu par moulage d'une composition de résine à base de polycarbonate comprenant un mélange de :

100 parties en masse d'une résine à base de polycarbonate (A) comprenant

30% en masse à 100% en masse d'un copolymère de polycarbonate-polyorganosiloxane (A-1) présentant une séquence polycarbonate comprenant, dans une chaîne principale de celui-ci, un motif répétitif représenté par la formule générale (I), et une séquence polyorganosiloxane contenant une structure répétitive siloxane représentée par la formule générale (II) et présentant un nombre moyen n de répétitions de 70 à 500, et
70 % en masse à 0 % en masse d'une résine polycarbonate aromatique (A-2) à l'exception du copolymère de polycarbonate-polyorganosiloxane (A-1) ; et

0,001 partie en masse à 1 partie en masse d'un absorbeur d'UV (B),
dans lequel l'absorbeur d'UV (B) est au moins un sélectionné à partir d'un absorbeur d'UV à base de benzophénone et d'un absorbeur d'UV à base de benzotriazole,
dans lequel une teneur x en séquence polyorganosiloxane dans la résine à base de polycarbonate (A) est de 2,0 % en masse à 15,0 % en masse, et un produit nx du nombre moyen n de répétitions et de la teneur x en séquence polyorganosiloxane est de 400 ou plus :

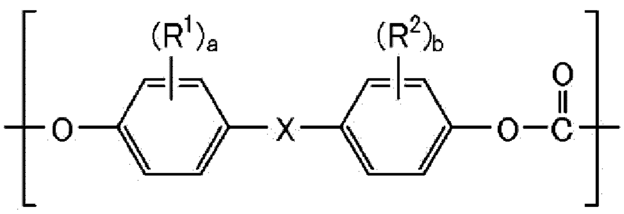

(I)

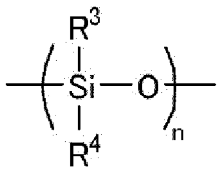

(II)

dans lequel :

$R^1$ et $R^2$ représentent chacun indépendamment un atome d'halogène, un groupe alkyle présentant de 1 à 6 atomes de carbone, ou un groupe alcoxy présentant de 1 à 6 atomes de carbone, X représente une liaison simple, un groupe alkylène présentant de 1 à 8 atomes de carbone, un groupe alkylidène présentant de 2 à 8 atomes de carbone, un groupe cycloalkylène présentant de 5 à 15 atomes de carbone, un groupe cycloalkylidène présentant de 5 à 15 atomes de carbone, un groupe fluorènediyle, un groupe arylalkylène présentant de 7 à 15 atomes de carbone, un groupe arylalkylidène présentant de 7 à 15 atomes de carbone, -S-, -SO-, $-SO_2-$, -O- ou -CO-, et a et b représentent chacun indépendamment un nombre entier de 0 à 4 ; et
$R^3$ et $R^4$ représentent chacun indépendamment un atome d'hydrogène, un atome d'halogène, un groupe alkyle présentant de 1 à 6 atomes de carbone, un groupe alcoxy présentant de 1 à 6 atomes de carbone, ou un groupe aryle présentant de 6 à 12 atomes de carbone, et le nombre moyen n de répétitions représente un nombre total de motifs répétitifs siloxane dans la séquence polyorganosiloxane.

2. Corps moulé pour une installation extérieure selon la revendication 1, dans lequel la composition de résine à base de polycarbonate comprend en outre 0,001 partie en masse à 2 parties en masse d'un antioxydant (C) pour 100 parties en masse de la résine à base de polycarbonate (A).

3. Corps moulé pour une installation extérieure selon la revendication 1, dans lequel la composition de résine à base de polycarbonate comprend en outre 0,005 partie en masse à 1 partie en masse d'un antioxydant (C) pour 100 parties en masse de la résine à base de polycarbonate (A).

4. Corps moulé pour une installation extérieure selon la revendication 1, dans lequel la composition de résine à base de polycarbonate comprend en outre 0,01 partie en masse à 0,5 partie en masse d'un antioxydant (C) pour 100 parties en masse de la résine à base de polycarbonate (A).

5. Corps moulé pour une installation extérieure selon l'une quelconque des revendications 1 à 4, dans lequel la résine à base de polycarbonate (A) présente un poids moléculaire moyen en viscosité de 16 000 à 26 000,
dans lequel le poids moléculaire moyen en viscosité (Mv) est une valeur calculée à partir de l'équation de Schnell :

$$[\eta] = 1{,}23 \times 10^{-5} \times Mv^{0{,}83}$$

en mesurant la viscosité limite [η] d'une solution de chlorure de méthylène à 20 °C avec un tube de viscosité de type Ubbelohde.

6. Corps moulé pour une installation extérieure selon l'une quelconque des revendications 1 à 5, dans lequel la séquence polyorganosiloxane contenant la structure répétitive siloxane représentée par la formule générale (II) est représentée par la formule générale (II') ou la formule générale (II") suivantes :

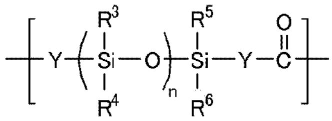
(II')

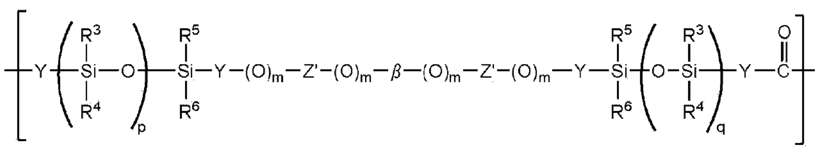
(II")

dans lequel, dans la formule générale (II') et la formule générale (II"), $R^3$ à $R^6$ représentent chacun indépendamment un atome d'hydrogène, un atome d'halogène, un groupe alkyle présentant de 1 à 6 atomes de carbone, un groupe alcoxy présentant de 1 à 6 atomes de carbone, ou un groupe aryle présentant de 6 à 12 atomes de carbone, Y représente une liaison simple, ou un résidu organique divalent contenant - C(=O)-, un groupe aliphatique, ou un groupe aromatique, n représente un nombre moyen de répétitions de 70 à 500, Z' représente une liaison simple, $-R^7O-$, $-R^7COO-$, - $R^7NH-$, -COO-, ou -S-, et le $R^7$ représente un groupe alkylène linéaire, ramifié ou cyclique, un groupe alkylène à substitution aryle qui peut présenter un groupe alcoxy sur un cycle aromatique de celui-ci, un groupe arylène, ou un groupe diarylène, β représente un groupe divalent dérivé d'un composé diisocyanate ou un

groupe divalent dérivé d'un acide dicarboxylique, m représente 0 ou 1, et une somme de p et q est égale à n, et représente un nombre moyen de répétitions de 70 à 500.

**7.** Corps moulé pour une installation extérieure selon l'une quelconque des revendications 1 à 6, dans lequel la teneur en résine polycarbonate aromatique (A-2) est de 40 % en masse à 0 % en masse dans le composant (A).

**8.** Corps moulé pour une installation extérieure selon l'une quelconque des revendications 1 à 7, dans lequel la teneur en résine polycarbonate aromatique (A-2) est de 30 % en masse à 0 % en masse dans le composant (A).

**9.** Corps moulé pour une installation extérieure selon l'une quelconque des revendications 1 à 8, dans lequel la teneur en résine polycarbonate aromatique (A-2) est de 20 % en masse à 0 % en masse dans le composant (A).

**10.** Corps moulé pour une installation extérieure selon l'une quelconque des revendications 1 à 9, dans lequel le corps moulé pour une installation extérieure est sélectionné parmi une boîte de stockage extérieure électrique et électronique, une boîte de jonction pour génération d'énergie photovoltaïque, un boîtier de chauffe-eau solaire, un boîtier d'unité extérieure de climatiseur, un matériau de toiture pour abris à voitures, et un châssis extérieur pour un panneau de signalisation ou une colonne publicitaire.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2639271 A1
- JP 2012153824 A
- US 20090088514 A1
- WO 20111551490 A1
- JP 2011246530 A
- JP 2010241943 A
- JP 47040445 B